# EUROPEAN PATENT APPLICATION

(11) **EP 3 804 581 A1**
(43) Date of publication of application: **14.04.2021**
(21) Application number: 19840873.4
(22) Date of filing: 01.03.2019
(51) Int. Cl.: A47J 36/02

(54) **COATING, METHOD AND SYSTEM FOR FORMING COATING, COOKWARE AND COOKING EQUIPMENT**

(30) Priority: 27.07.2018 CN 201810848164; 27.07.2018 CN 201810845285; 02.11.2018 CN 201811299220; 02.11.2018 CN 201821806196 U; 02.11.2018 CN 201811300897; 02.11.2018 CN 201821808252 U
(71) Applicant: Foshan Shunde Midea Electrical Heating Appliances Manufacturing Co., Ltd., Foshan, Guangdong 528311 (CN)
(72) Inventor: CAO, Dahua, Foshan, Guangdong 528311 (CN); CHEN, Weijie, Foshan, Guangdong 528311 (CN); WAN, Peng, Foshan, Guangdong 528311 (CN); HUANG, Yuhua, Foshan, Guangdong 528311 (CN)
(74) Representative: RGTH
(86) International application number: PCT/CN2019/076743
(87) International publication number: WO 2020/019717

(57) **Abstract**

Disclosed are a coating (100), a method and system for forming the coating, cookware and a piece of cooking equipment. The coating comprises: a plurality of quasicrystalline material-containing sub-coating layers (101a, 101b, 101c, 101d) disposed in sequence from bottom to top in a stacked manner, wherein the particle size of the quasicrystalline material in at least one sub-coating layer is greater than the particle size of the quasicrystalline material in at least one sub-coating layer located above same. The coating has a good non-stick property, a low cost, and a simple preparation process, and is easy to industrialize and is suitable for use in cooking equipment.

## Description

### CROSS-REFERENCE TO RELATED APPLICATION

This application claims the priority of the Chinese Patent Application No. 201810848164.8 filed in the Chinese Patent Office on July 27, 2018, entitled "Coating and Cooking Equipment"; the Chinese Patent Application No. 201810845285.7, entitled "Method and System for Forming Quasicrystalline Coating"; the Chinese Patent Application No. 201811299220.3 filed in the Chinese Patent Office on November 2, 2018, entitled "Coating and Cooking Equipment"; the Chinese Patent Application No. 201821806196.3, entitled "Coating and Cooking Equipment"; the Chinese Patent Application No. 201811300897.4, entitled "Method and System for Forming quasicrystalline Coating and Cookware"; the Chinese Patent Application No. 201821808252.7, entitled "System for Forming Quasicrystalline Coating and Cookware", the entire contents of which are incorporated herein by reference.

### TECHNICAL FIELD

The present disclosure relates to the technical field of materials, in particular to a coating, a method and a system for forming the coating, cookware and cooking equipment.

### BACKGROUND

Quasicrystalline coating has the advantages of high hardness, high corrosion resistance, wear resistance, low surface energy and so on, and has been widely concerned by researchers. Quasicrystalline coating has also become a hot alternative material to replace the existing Teflon non-stick coating. However, the production cost of the quasicrystalline coating with a good non-stick property is very high, which severely limits the industrialization of the quasicrystalline coating.

Thus, the related art of existing quasicrystalline coating remains to be improved.

### SUMMARY

The present disclosure is directed to solve at least one of the technical problems in the related art to some extent. Therefore, it is an object of the present disclosure to provide a coating which has a good non-stick property, a low cost, a simple preparation process, and is easy to industrialize, or it is particularly suitable for use in cooking equipment.

In an aspect of the present disclosure, a coating is provided. According to an embodiment of the present disclosure, the coating comprises a plurality of quasicrystalline material-containing sub-coating layers stacked from a lower position to an upper position, wherein the particle size of the quasicrystalline material in at least one sub-coating layer is greater than the particle size of the quasicrystalline material in the at least one sub-coating layer located above it. The inventors have found that, according to the coating, the quasicrystalline material with a larger particle size is firstly formed at a lower layer of the coating, and then the quasicrystalline material with smaller particle size is formed at an upper layer of the coating, so that the coating has a good non-stick property, a low cost, a simple preparation process, and is easy to industrialize and particularly suitable for the cooking equipment.

According to an embodiment of the present disclosure, the particle size of the quasicrystalline material in an uppermost sub-coating layer is minimum among the plurality of the sub-coating layers.

According to an embodiment of the present disclosure, the particle size of the quasicrystalline material in a lowermost sub-coating layer is maximum among the plurality of sub-coating layers.

According to an embodiment of the present disclosure, the sub-coating layer further comprises a quasicrystalline approximant.

According to an embodiment of the present disclosure, the quasicrystalline approximant is a B₂ phase.

According to an embodiment of the present disclosure, at least 90% of the quasicrystalline material in the uppermost sub-coating layer has a particle size of not greater than 150 microns.

According to an embodiment of the present disclosure, at least 90% of the quasicrystalline material in the uppermost sub-coating layer has a particle size of 20-80 microns.

According to an embodiment of the present disclosure, at least 90% of the quasicrystalline material in the lowermost sub-coating layer has a particle size of 150-300 microns.

According to an embodiment of the present disclosure, the plurality of sub-coating layers each comprise a plurality of secondary-coating layers independently.

According to an embodiment of the present disclosure, each of the sub-coating layers comprises 5-10 secondary-coating layers.

According to an embodiment of the present disclosure, the coating has a thickness of 20-200 microns.

According to an embodiment of the present disclosure, the coating comprises a first sub-coating layer and a second sub-coating layer stacked from a lower position to an upper position, wherein at least 90% of the quasicrystalline material in the first sub-coating layer has a particle size of 150-300 microns or 80-150 microns, and at least 90% of the quasicrystalline material in the second sub-coating layer has a particle size of 20-150 microns.

According to an embodiment of the present disclosure, at least 90% of the quasicrystalline material in the second sub-coating layer has a particle size of 20-80 microns.

According to an embodiment of the present disclosure, the particle size of the quasicrystalline material in the sub-coating layer decreases gradually in a direction from a lower position to an upper position.

According to an embodiment of the present disclosure, the coating satisfies at least one of the following conditions: the surface roughness of an upper surface is less than 2 micrometers; the content of the quasicrystalline material is 20%-90%; the porosity is 0. 1%-20%; the thermal conductivity is 0.1-3 W/m·K; and the oxygen content is not greater than 10 at%.

According to an embodiment of the present disclosure, the oxygen content of the quasicrystalline coating is 4-7 at%.

In another aspect of the present disclosure, a coating is provided. According to an embodiment of the present disclosure, the coating comprises a plurality of quasicrystalline material-containing sub-coating layers stacked from a lower position to an upper position, wherein the porosity of the quasicrystalline material in at least one sub-coating layer is greater than the porosity of the quasicrystalline material in the at least one sub-coating layer located above it. It is found by the inventor that the quasicrystalline material with larger porosity in the coating is firstly formed at a lower layer of the coating, and then the quasicrystalline material with smaller porosity is formed at the upper layer of the coating, so that the coating can uniformly conduct heat without generating cracks, the phenomenon of local overheating can be reduced when the coating is used for the cooking equipment, and it is prevented from being burnt in a pot. In addition, the coating has a good non-stick property, a low cost, a simple preparation process, and is easy to industrialize.

According to an embodiment of the present disclosure, the porosity of the quasicrystalline material in an uppermost sub-coating layer is minimum among the plurality of the sub-coating layers.

According to an embodiment of the present disclosure, the porosity of the quasicrystalline material in a lowermost sub-coating layer is maximum among the plurality of sub-coating layers.

According to an embodiment of the present disclosure, the porosity of the quasicrystalline material is reduced in a gradient manner in the sub-coating layer from a lower position to an upper position.

In another aspect of the present disclosure, the present disclosure provides a method for forming the coating as described before.

The method is based on the discovery of the following facts and problems by the present disclosure:
In the research of the non-stick coating, the inventors have found that the existing organic coating such as PTFE, PFA and the like has the defects of low hardness, low adhesion and so on, can be easily scratched by hard objects to cause the coating to be damaged, thereby uncovering the base material which is originally covered by the coating, easily causing harmful metals (such as aluminum and the like) in the base material to escape in use, and impairing the physical health of a user. While ceramic coatings are susceptible to hydrolysis, the non-stick property of the coating tends to decrease with increasing use times.

Quasicrystalline material is a kind of material with low surface energy characteristics, and also has the characteristics of high hardness, low friction coefficient, wear and corrosion resistance, which makes the quasicrystalline material have the potential to replace the existing non-stick coating. Especially, the surface energy of Al-Cu-Fe quasicrystalline alloy is between stainless steel and polytetrafluoroethylene, about 25% greater than that of polytetrafluoroethylene. After Cr, Ti and other elements are added into the quasicrystalline alloy, the intergranular corrosion tendency of the quasicrystalline alloy can be further reduced, so that the corrosion resistance of the quasicrystalline alloy is further improved. However, the preparation cost of the quasicrystalline block is high, and the method for spraying the quasicrystalline powder on the surface of the base material to form the coating has important economic benefits and cost advantages.

Therefore, according to an embodiment of the present disclosure, the method comprises the steps of: (1) enabling a plurality of groups of quasicrystalline powders with different particle sizes to be stacked from a lower position to an upper positionto form a plurality of quasicrystalline material-containing sub-primary coating layers on a substrate, in order to obtain a primary coating; and (2) annealing the primary coating to obtain the coating comprising a plurality of sub-coating layers, wherein the particle size of the quasicrystalline material in at least one sub-coating layer is greater than the particle size of the quasicrystalline material in the at least one sub-coating layer located above it. The present disclosure has the advantages that on one hand, the operation is simple, convenient and easy to realize, and the coating with a good non-stick property can be effectively obtained; on the other hand, the method firstly utilizes the quasicrystalline powder to form a primary coating on the surface of the substrate, and then the primary coating is annealed to convert quasicrystalline seed crystals in the primary coating into quasicrystalline, so that the quasicrystalline content in the coating is further improved. The coating thus formed has excellent surface properties of high hardness, low friction coefficient, abrasion and corrosion resistance, and the like, and has the advantage of low preparation cost.

According to an embodiment of the present disclosure, the quasicrystalline powder is prepared by the steps of: pulverizing a quasicrystalline alloy ingot by a pluverization step to obtain quasicrystalline alloy powder; and sieving the quasicrystalline alloy powder by a sieving step to obtain a plurality of groups of quasicrystalline powder with different particle sizes.

According to an embodiment of the present disclosure, the plurality of groups of quasicrystalline powder with different particle sizes comprise a first powder and a second powder, the particle size of the first powder particles is less than the particle size of the second powder particles.

According to an embodiment of the present disclosure, the quasicrystalline alloy ingot is formed by smelting a mixture comprising at least one of an aluminum material, a copper material, an iron material, and a chromium material.

According to an embodiment of the present disclosure, the mixture comprises 60-70% aluminum, 10-25% of copper, 5-15% of iron, and 5-15% of chromium by atomic percentage; alternatively, the atomic percentages of aluminum, copper, iron and chromium in the mixture are as follows: 60-70% of aluminum, 10-25% of copper, 5-15% of iron and 5-15% of chromium.

According to an embodiment of the present disclosure, the aluminum material is pure aluminum, the copper material is pure copper, the iron material is pure iron, and the chromium material is pure chromium or a chromium titanium alloy.

According to an embodiment of the present disclosure, the method further comprises preparing the quasicrystalline alloy ingot by using the quasicrystalline powder having a particle size that does not meet coating preparation requirements.

According to an embodiment of the present disclosure, the pulverization is performed by an atomization pulverization method.

According to an embodiment of the present disclosure, the step (1) further comprises: (1-1) forming a first sub-primary coating layer by the second powder on the substrate based on the second powder; and (1-2) forming a second primary sub-coating layer by the first powder on a surface of the first sub-primary coating layer away from the substrate .

According to an embodiment of the present disclosure, the plurality of quasicrystalline material-containing sub-primary coating layers are formed by a spraying method.

According to an embodiment of the present disclosure, the plurality of quasicrystalline material-containing sub-primary coating layers are formed by a plasma spraying method.

According to the embodiment of the present disclosure, the conditions of the plasma spraying method comprise the arc power of 25-50 kW and the arc voltage of 40-50 V.

According to an embodiment of the present disclosure, the annealing is performed in an inert gas atmosphere or a vacuum, and the temperature of the annealing is 600-800°C.

According to an embodiment of the present disclosure, the annealing conditions are the heating rate of 5-100 °C/min, the heating preservation time of 0.5-10 h, and the cooling rate of 5-100 °C/min; and the temperature is reduced to 200-300°C, and cooled to room temperature by furnace cooling.

According to an embodiment of the present disclosure, it further comprises polishing the coating after the step (2).

In yet another aspect, the present disclosure provides a system for performing the method for forming the coating described above. According to the embodiment of the present disclosure, the system comprises: a spraying device configured to spray the quasicrystalline powder on the surface of the substrate so as to obtain a primary coating; and an annealing device connected to the spraying device and configured to anneal the primary coating so as to obtain the coating. The inventors have found that the system first uses a spraying device to spray the quasicrystalline powder onto the substrate surface to form a primary coating on the substrate surface. The primary coating is subjected to annealing by using an annealing device to convert quasicrystalline seed crystals in the primary coating into quasicrystalline, thereby further improving the quasicrystalline content in the coating. The coating thus formed has excellent surface properties of high hardness, low friction coefficient, abrasion and corrosion resistance, and the like. Thus, the coating-forming system of the present disclosure can effectively form a coating having the above-mentioned advantages while having the advantage of low preparation cost.

According to an embodiment of the present disclosure, the system further comprises: a pulverizing device configured to pulverize the quasicrystalline alloy ingot so as to obtain quasicrystalline alloy powder; and a sieving device connected with the pulverizing device and the spraying device and configured to sieve the quasicrystalline alloy powder so as to obtain a plurality of groups of quasicrystalline powder with different particle sizes.

According to an embodiment of the present disclosure, the spraying device is configured to form the primary coating on the substrate based on the plurality of groups of quasicrystalline powder with different particle sizes.

According to an embodiment of the present disclosure, the system further comprises a smelting device connected to the pulverizing device and configured to smelt a mixture containing at least one of an aluminum material, a copper material, an iron material and a chromium material so as to obtain a quasicrystalline alloy ingot.

According to an embodiment of the present disclosure, the sieving device comprises a plurality of sieving units having a sieve disposed therein, the sieve is configured to sieve the quasicrystalline alloy powder to obtain the plurality of groups of quasicrystalline powder with different particle sizes.

According to an embodiment of the present disclosure, the spraying device comprises a plurality of sub-primary coating layer spraying units configured to form the plurality of quasicrystalline material-containing sub-primary coating layers on the substrate by using the plurality of groups of quasicrystalline powder with different particle sizes.

According to the embodiment of the present disclosure, the sieving device is connected to the smelting device and is configured to convey the quasicrystalline powder having a particle size that does not meet coating preparation requirements to the smelting device.

According to the embodiment of the present disclosure, the system further comprises a polishing device connected to the annealing device and configured to polish the coating.

In yet another aspect of the present disclosure, a cookware is provided. According to the embodiment of the present disclosure, the cookware comprises: a cookware body and a coating layer disposed on at least a portion of an inner surface of the cookware body, wherein the coating is the coating mentioned above, or the coating is prepared by the method or the system mentioned above; alternatively, the cookware is prepared using the method of the above-mentioned embodiments or the system of the above-mentioned embodiments. The pot body of the cookware is the substrate. Thus, the inner surface of the pot body of the cookware has a coating formed by the method of the above-mentioned embodiment or the system of the above-mentioned embodiment. The inventors have found that the inner surface of the cookware has excellent surface properties, and that the cookware has a good non-stick property, a low cost, and is easy to industrialize, with all the features and advantages of the above-mentioned coating, which will not be described in more detail herein.

According to an embodiment of the present disclosure, the inner surface of the pot body of the cookware is pre-treated prior to forming the coating, and the pre-treatment comprises stamping, sanding, drying and desanding.

In yet another aspect of the present disclosure, cooking equipment is provided. According to an embodiment of the present disclosure, the cooking equipment comprises the above-mentioned cookware, and the cooking equipment is at least one selected from the group consisting of a wok, a frying pan, a stewing pan, a milk pan, an electric rice cooker and a pressure cooker. The inventors have found that the cooking equipment has all the features and advantages of the above-mentioned cookware and will not be described in more detail here.

### BRIEF DESCRIPTION OF THE DRAWINGS

Fig. 1 shows a structural cross-sectional view of a coating according to an embodiment of the present disclosure.
Fig. 2 shows a structural cross-sectional view of a sub-coating layer according to an embodiment of the present disclosure.
Fig. 3 shows a structural cross-sectional view of the coating according to another embodiment of the present disclosure.
Fig. 4 shows a flow diagram of a method for preparing a coating according to an embodiment of the present disclosure.
Fig. 5 shows a flow diagram of the method for preparing the coating according to another embodiment of the present disclosure.
Fig. 6 shows a flow diagram of the method for preparing the coating according to yet another embodiment of the present disclosure.
Fig. 7 is a flow diagram of a method for forming a coating according to an embodiment of the present disclosure.
Fig. 8 is a flow diagram of the method for forming the coating according to yet another embodiment of the present disclosure.
Fig. 9 is a flow diagram of the method for forming the coating according to yet another embodiment of the present disclosure.
Fig. 10 is a flow diagram of the method for forming the coating according to yet another embodiment of the present disclosure.
Fig. 11 is a structural diagram of a system for forming a coating according to an embodiment of the present disclosure.
Fig. 12 is a structural diagram of the system for forming the coating according to yet another embodiment of the present disclosure.
Fig. 13 is a structural diagram of the system for forming the coating according to yet another embodiment of the present disclosure.
Fig. 14 is a structural diagram of the system for forming the coating according to yet another embodiment of the present disclosure.
Fig. 15 is a structural diagram of the system for forming the coating according to yet another embodiment of the present disclosure.
Fig. 16 is a structural diagram of the system for forming the coating according to yet another embodiment of the present disclosure.
Fig. 17 is a surface topography of a first sub-primary coating layer according to an embodiment of the present disclosure.

### Reference numerals:

1: pulverizing device, 2: sieving device, 2-1: first sieving unit, 2-2: second sieving unit, 2-3: third sieving unit, 10: spraying device, 11: first sub-primary coating layer spraying unit, 12: second sub-primary coating layer spraying unit, 20: annealing device, 40: smelting device, 50: polishing device, 100: coatings, 101a, 101b, 101c, 101d: sub-coating layer, 1011a, 1011b, 1011c, 1011d: secondary-coating layer, 110: first sub-coating layer, 120: second sub-coating layer

### DETAILED DESCRIPTION

Embodiments of the present disclosure are described in detail below. The embodiments described below are illustrative only and are not to be construed as limiting the present disclosure. Where specific techniques or conditions are not indicated in the embodiments, they are carried out according to the techniques or conditions described in the literature in the art or according to the product specifications. Reagents or instruments used are not known to the manufacturer and are conventional products commercially available.

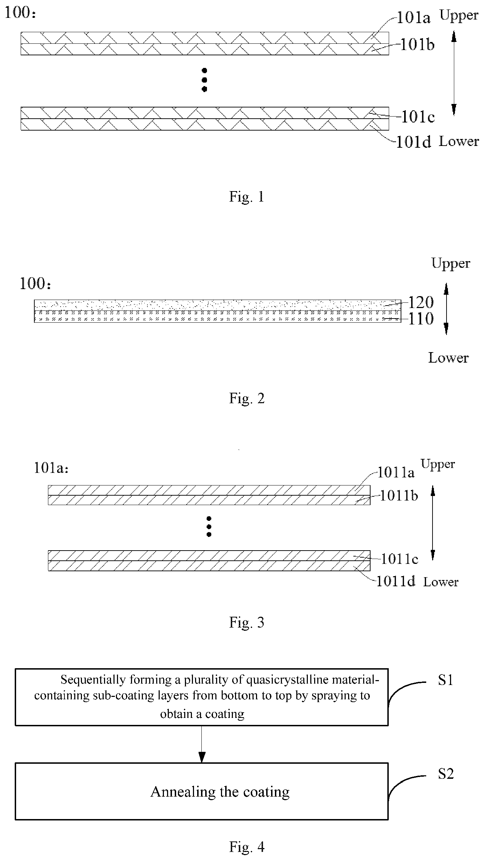

In an aspect of the present disclosure, a coating is provided. According to an embodiment of the present disclosure, referring to Fig. 1, the coating 100 includes a plurality of quasicrystalline material-containing sub-coating layers 101d, 101c, ···, 101b, 101a stacked from a lower position to an upper position, wherein the particle size of the quasicrystalline material in at least one sub-coating layer is greater than the particle size of the quasicrystalline material in the at least one sub-coating layer located above it (it should be noted that Fig. 1 is only an exemplary illustration of the structure of the coating 100, without limiting the number of sub-coating layers in the coating 100 in any way; and as used herein, the particle size refers to the range of the particle size). The inventors have found that the quasicrystalline material with a larger particle size is formed as a lower layer of the coating 100, and then the quasicrystalline material with smaller particle size is formed as an upper layer of the coating 100, so that the coating 100 has a good non-stick property, a low cost, a simple preparation process, and is easy to industrialize and particularly suitable for the cooking equipment.

Alternatively, it can also be as follows.

In an aspect of the present disclosure, a coating is provided. According to an embodiment of the present disclosure, referring to Fig. 1, the coating 100 includes a plurality of quasicrystalline material-containing sub-coating layers 101d, 101c, ···, 101b, 101a stacked from a lower position to an upper position, wherein the quasicrystalline materials of at least two of the sub-coating layers 101a, 101b, ···, 101c, 101d have different particle sizes, and the quasicrystalline material forming the uppermost sub-coating layer 101a has a minimum particle size (it should be noted that Fig. 1 is only an exemplary illustration of the structure of the coating 100, without limiting the number of sub-coating layers in the coating 100 in any way; and as used herein, the particle size refers to the range of the particle size). The inventors have found that the quasicrystalline material with a larger particle size is formed as a lower layer of the coating 100, and then the quasicrystalline material with smaller particle size is formed as an upper layer of the coating 100, so that the coating 100 has a good non-stick property, a low cost, a simple preparation process, and is easy to industrialize and particularly suitable for the cooking equipment.

According to an embodiment of the present disclosure, the coating may be disposed on a metal base material or a metal composite panel. Preferably, the metal base material is aluminum, stainless steel, carbon steel, iron, etc. Therefore, the coating is suitable for various fields, and has wide prospect and application range.

In the prior art, the particle sizes of the quasicrystalline material of the quasicrystalline coating in the thickness direction are the same, and the quasicrystalline coating which is prepared by researchers and has the same particle sizes of the quasicrystalline material in the thickness direction is sometimes good and sometimes bad for the non-stick property of quasicrystalline coating. The inventors of the present application have surprisingly found that a coating formed of a quasicrystalline material having a smaller particle size has a larger contact angle due to a smaller pore size between particles, where by the quasicrystalline coating having the same particle size in the thickness direction of the quasicrystalline material has good non-tackiness only when the particle size of the quasicrystalline material forming the coating layer is smaller. Moreover, the inventors of the present application have creatively broken the general recognition by those skilled in the art that each portion of a quasicrystalline coating structure in the prior art is formed by the quasicrystalline material having the same particle size. Referring to Fig. 1, in the formed coating 100, the particle size of the quasicrystalline material in at least one sub-coating layer is greater than the particle size of the quasicrystalline material in the at least one sub-coating layer located above it. For example, specifically, the particle size of the quasicrystalline material in the sub-coating layer 101d is greater than that of the quasicrystalline material in the sub-coating layer 101c, the particle sizes of the quasicrystalline materials in each sub-coating layer are independent of each other and do not affect each other, and the particle sizes of the quasicrystalline materials in the sub-coating layers 101a and 101b are not particularly limited; or it can also be that in the formed coating 100, the particle size of the quasicrystalline material of the sub-coating layer 101a forming the uppermost layer is minimum while the particle sizes of the quasicrystalline materials of at least two of the sub-coating layers 101a, 101b, ···, 101c, 101d are different. Therefore, the quasicrystalline material with a larger particle size is firstly formed at the lower layer of the coating 100, and then the quasicrystalline material with a smaller particle size is formed at the upper layer of the coating 100, so that the waste of the quasicrystalline material with the larger particle size can be avoided, and the production cost is greatly reduced. Meanwhile, the quasicrystalline material with the larger particle size is firstly formed at the lower layer of the coating 100, the quasicrystalline material with the smaller particle size is formed at the upper layer of the coating 100, and the particle size of the quasicrystalline material at the lower layer is larger; the quasicrystalline material has better binding force with the base material of the coating, the porosity can be increased, and the heat conductivity is further reduced, so that the base material can uniformly conduct heat, the phenomenon of local overheating is reduced, and the burnt pot is prevented; the particle size of the quasicrystalline material at the upper layer is smaller, a denser upper layer is formed, the non-stickiness is good, and the quasicrystalline material with the large particle size is matched with the quasicrystalline material with the small particle size, so that the formed coating 100 has a good wear resistance and non-stick property, which is particularly suitable for the cooking equipment.

According to an embodiment of the present disclosure, the expression "the particle sizes of the quasicrystalline material of at least two of the sub-coating layers 101a, 101b, ···, 101c, 101d are different" as used herein means that it is only ensured that the particle sizes of the quasicrystalline material of at least two of the plurality of sub-coating layers 101a, 101b, ···, 101c, 101d are different in terms of the particle sizes of the quasicrystalline material forming the plurality of sub-coating layers 101a, 101b, ···, 101c, 101d. For example, it may be that the particle sizes of the quasicrystalline material of the sub-coating layer 101a and the sub-coating layer 101b are different, or the particle sizes of the quasicrystalline material of the sub-coating layer 101b and the sub-coating layer 101c are different; and also it may be that the particle sizes of the quasicrystalline material of the sub-coating layer 101c and the sub-coating layer 101d are different, wherein the positions of two of the sub-coating layers having different particle sizes in the coating 100 are not particularly limited.

In accordance with embodiments of the present disclosure, it will be appreciated by those skilled in the art that, as used herein, "a quasicrystalline material forming a plurality of sub-coating layers" and "a quasicrystalline material in a sub-coating layer" both refer to the same quasicrystalline material, i.e., the definition of the term "quasicrystalline material" in the "forming a plurality of sub-coating layers" and "in a sub-coating layer" are the same. The "a quasicrystalline material forming a plurality of sub-coating layers" and "a quasicrystalline material in a sub-coating layer" will also appear hereinafter and will not be described in detail.

According to an embodiment of the present disclosure, it is preferable that the particle size of the quasicrystalline material forming the uppermost sub-coating layer 101a is minimum (it should be noted that the minimum here means that the particle size of the quasicrystalline material forming the uppermost sub-coating layer 101a is minimum among the quasicrystalline materials forming the plurality of the sub-coating layers). As described above, it can also be said here that the particle size of the quasicrystalline material in the uppermost sub-coating layer is minimum among the plurality of the sub-coating layers. Due to the fact that the particle size of the quasicrystalline material forming the uppermost sub-coating layer 101a is minimum, the uppermost sub-coating layer 101a is denser, and the non-stick property of the coating layer can be further improved; and the quasicrystalline material with the large particle size is matched with the quasicrystalline material with the small particle size, so that the formed coating 100 has a good wear resistance and non-stick property, which is particularly suitable for the cooking equipment.

According to an embodiment of the present disclosure, it is only ensured that the particle size of the quasicrystalline material forming the uppermost sub-coating layer 101a is minimum in a plurality of the sub-coatings 101a, 101b, ···, 101c, 101d of the coating 100. For other sub-coating layers, such as the sub-coating layers 101b, ···, 101c, 101d, etc, the particle size order of the quasicrystalline material is not particularly limited; the particle size of the quasicrystalline material in the sub-coating layer 101b may be maximum, and the particle size of the quasicrystalline material in the sub-coating layer 101d is minimum; the particle size of the quasicrystalline material in the sub-coating 101c may also be maximum; and the particle size of the quasicrystalline material in the sub-coating 101d may also be maximum .

According to an embodiment of the present disclosure, it is preferable that the particle size of the quasicrystalline material forming the lowermost sub-coating layer 101d is maximum (it should be noted that the maximum here means that the particle size of the quasicrystalline material forming the lowermost sub-coating layer 101d is maximum among the quasicrystalline materials forming the plurality of the sub-coating layers). As described above, it can also be said here that the particle size of the quasicrystalline material in the lowermost sub-coating layer is maximum among the plurality of the sub-coating layers. Due to the fact that the particle size of the quasi crystalline material forming the lowermost sub-coating layer 101d at the moment is maximum, the coating has stronger and better bonding force with the base material, the porosity can be further increased, and the thermal conductivity is further reduced, so that the base material can uniformly conduct heat, the phenomenon of local overheating is further reduced, and the burnt pot is prevented.

In still other embodiments of the present disclosure, referring to Fig. 1, the particle size of the quasi crystalline material forming the sub-coating layers 101d, 101c, ···, 101b, 101a from a lower position to an upper position decreases gradually (alternatively, the particle size of the quasicrystalline material in the sub-coating layer decreases gradually in the direction from a lower position to an upper position). Thus, since the particle sizes of the adjacent sub-coating layers, for example, between the sub-coating layer 101a and the sub-coating layer 101b and between the sub-coating layer 101c and the sub-coating layer 101d, are not greatly different, the particle sizes of the quasicrystalline material forming the sub-coating layers 101a, 101b, ···, 101c, 101d of the entire coating 100 from a lower position to an upper position are reduced in a gradient manner, the bonding force between the sub-coating layers can be made strong. The wear resistance and the non-stick property of the coating are further improved, which is particularly suitable for the cooking equipment.

In still other embodiments of the present disclosure, the sub-coating layer may further include a quasicrystalline approximant. Therefore, the coating has a wide range of composite composition, low brittleness, few defects, and low preparation difficulty. In addition, the coating possesses a non-stick property, wear and corrosion resistance similar to those of a quasicrystalline coating, and wide application prospect.

According to an embodiment of the present disclosure, the quasicrystalline approximant may be a B₂ phase. The B₂ phase and a B₂-based approximant usually coexist with the quasicrystalline and are in coherent orientation with the quasicrystalline, so the properties of B₂ phase are closer to those of the quasicrystalline. In addition, the valence electron concentration determines the crystal structure characteristics of the material, so that the quasicrystalline has extremely low surface energy, and the quasicrystalline and the approximant are obviously located in the vicinity of a specific valence electron concentration. For example, taking Al-Cu-Fe in the quasicrystalline system as an example, the equivalent electron concentration is 1.86. That is, the valence electron concentration of the Al-Cu-Fe alloy in the form of quasicrystalline is 1.86, and the valence electron concentration of the quasicrystalline approximant Al-Cu-Fe alloy with the B₂ structure is 1.6-2.2. Therefore, by controlling the quasicrystalline approximant in the quasicrystalline approximant coating to be the B₂ phase, the quasicrystalline approximant coating possesses a non-stick property, wear and corrosion resistance, lower brittleness and fewer defects. Therefore, the quasicrystalline approximant coating can have a better non-stick property, and wear and corrosion resistance, and the like.

According to an embodiment of the present disclosure, the inventors have conducted extensive and intensive investigations and experimental verification on the particle size of the quasicrystalline material and found that when at least 90% of the grain size of the quasicrystalline material is not greater than 150 microns in the quasicrystalline material forming the uppermost sub-coating layer (alternatively, at least 90% of the particle size of the quasicrystalline material is not greater than 150 microns in the uppermost sub-coating layer), the pore size between the quasicrystalline materials is small, so that the contact angle of the coating 100 formed by the quasicrystalline material is large, and thus the coating 100 formed has a better non-stick property. Thus, in some embodiments of the present disclosure, the particle size of the quasicrystalline material forming the uppermost sub-coating layer 101a is not greater than 150 microns (alternatively, the particle size of the quasicrystalline material in the uppermost sub-coating layer 101a is not greater than 150 microns). Still further, in other embodiments of the present disclosure, at least 90% of the particle size of quasicrystalline material forming the uppermost sub-coating layer is 20-80 microns, resulting in a denser coating 100 and a lower surface roughness. In some specific embodiments of the present disclosure, at least 90% of the particle size of the quasicrystalline material forming the uppermost sub-coating layer 101a may be 20 microns, 40 microns, 60 microns, 80 microns, etc. Thus, the coating 100 has a better non-stick property.

According to an embodiment of the present disclosure, at least 90% of the particle sizes of the quasicrystalline material forming the lower sub-coating layers 101b, ···, 101c, 101d are 150-300 microns or 80-150 microns (alternatively, at least 90% of the particle sizes of the quasicrystalline material are 150-300 microns or 80-150 microns in the lower sub-coating layers). In some specific embodiments of the present disclosure, the particle sizes of the quasicrystalline material forming the lower sub-coatings 101b, ···, 101c, 101d may be 80 microns, 100 microns, 120 microns, 150 microns, 180 microns, 210 microns, 240 microns, 270 microns, 300 microns, etc. Therefore, the waste of the quasicrystalline material with the larger particle size is avoided, and the production cost is greatly reduced.

In still other embodiments of the present disclosure, referring to Fig. 2, the coating 100 includes a first sub-coating 110 and a second sub-coating layer 120 stacked from a lower position to an upper position, wherein at least 90% of the particle sizes of the quasicrystalline material are 150-300 microns or 80-150 microns in the quasicrystalline material forming the first sub-coating layer 110 (alternatively, the quasicrystalline material in the first sub-coating layer 110); at least 90% of the particle sizes of the quasicrystalline material are 20-150 microns and further may have be 20 to 80 microns in the quasicrystalline material forming the second sub-coating layer 120 (alternatively, the quasicrystalline material in the second sub-coating layer 120). In some specific embodiments of the present disclosure, the particle sizes of the quasicrystalline material forming the first sub-coating layer 110 may be 150 microns, 180 microns, 210 microns, 240 microns, 270 microns, 300 microns, etc., and the particle size of the quasicrystalline material forming the second sub-coating layer 120 may be 20 microns, 50 microns, 80 microns, 110 microns, 150 microns, etc. Therefore, the coating 100 has a good non-stick property, a low cost, and a simple preparation process, and is easy to industrialize and particularly suitable for cooking equipment.

According to an embodiment of the present disclosure, the coating 100 of the present disclosure may have a thickness of 20-200 microns. In some specific embodiments of the present disclosure, the thickness of the coating 100 may be 20 microns, 40 microns, 60 microns, 80 microns, 100 microns, 120 microns, 140 microns, 160 microns, 180 microns, 200 microns, etc. Therefore, the thickness of the coating 100 is moderate. Good non-stick property, wear resistance and hardness are guaranteed, and meanwhile heat transfer of the coating is not too fast, so that the coating is particularly suitable for the cooking equipment, avoiding waste of materials, with low cost and easy industrialization.

According to an embodiment of the present disclosure, the surface roughness of the upper surface of the coating 100 of the present disclosure is less than 2 microns. In some specific embodiments of the present disclosure, the surface roughness of the upper surface of the coating 100 may be 0.5 microns, 1 micron, 1.5 microns, etc. Therefore, the surface roughness of the upper surface of the coating 100 is low, and the coating 100 can further have a better non-sticking property. Furthermore, because the roughness is too large, the conditioner and the like can be easily deposited in the gap, the non-stick property of the coating can be reduced in the long-time use process, and the use effect is affected.

According to an embodiment of the present disclosure, the kind, composition, ratio between the components and the like of the quasicrystalline material are not particularly limited, and a person skilled in the art would be able to flexibly select according to requirements as long as the requirements are met. According to an embodiment of the present disclosure, the material for forming the non-stick coating comprises at least two of aluminum, iron, copper, chromium, titanium, nickel and zirconium, and the material for forming the non-stick coating includes an Al-Cu-Fe alloy, an Al-Cu-Fe-Cr alloy, a Ti-Fe alloy or a Ti-Ni-Zr alloy. In some embodiments of the present disclosure, the quasicrystalline material may be an Al-Cu-Fe-Cr quasi crystalline material in which the ratio of atomic quantity among Al (aluminum), Cu (copper), Fe (iron), and Cr (chromium) may be (60-70) : (15-25) : (5-15) : (5-15). Therefore, the material is wide in source, easy to obtain, low in cost, easy for industrial production, capable of obtaining high-content quasicrystalline, high in hardness and wear resistance, and good in non-stick property.

According to an embodiment of the present disclosure, the content of the quasicrystalline material in the coating 100 may range from 20%-90%, for example, 20%, 30%, 40%, 50%, 60%, 70%, 80%, 90%, etc. Therefore, the coating can further has a good non-stick property, a low cost, a simple preparation process, and is easy to industrialize, the non-stick property of the coating 100 can be further improved, and the content of the quasicrystal in the finally obtained coating can be higher.

According to an embodiment of the present disclosure, the quasicrystalline material has an icosahedral or icosidodecahedral microstructure and the uppermost quasicrystalline coating has a concave-convex structure. Therefore, the quasicrystalline coating on the surface of the quasicrystalline material is high in hardness and wear resistance, and good in hydrophobicity and non-stick property.

According to an embodiment of the present disclosure, the quasicrystalline material may have a valence electron concentration of 1.5 to 2.5. Still further, in some embodiments of the present disclosure, the quasicrystalline material may have a valence electron concentration of 1.6-1.86. In some specific embodiments of the present disclosure, the quasicrystalline material may have a valence electron concentration of 1.6, 1.7, 1.8, 1.86, etc. Thus, the quasicrystalline content of the formed coating is relatively high when the valence electron concentration of the alloy is within this range at the time of factory dosing.

According to an embodiment of the present disclosure, the porosity of the coating 100 may be 0.1% 20%. In some embodiments of the present disclosure, the porosity of the coating 100 may be 0.1%, 0.5%, 2%, 5%, 10%, 20%, etc. Therefore, the porosity in the coating 100 is small, and thus the contact angle of the coating 100 is large, so that the non-stick property of the coating 100 can be further improved. In addition, the porosity range value of the coating 100 is moderate. Reasonable porosity can reduce stress concentration of the coating 100, and avoid cracks of the coating 100. Too many pores do not occur to reduce hardness and abrasion resistance of the coating and affect durability of the coating 100.

According to an embodiment of the present disclosure, the thermal conductivity of the coating may be 0.1-3 W/m·K. In some embodiments of the present disclosure, the thermal conductivity of the coating 100 may be 0.1 W/m·K, 0.2 W/m·K, 0.5 W/m·K, 1 W/m·K, 2 W/m·K, 3 W/m·K, etc. Therefore, the heat conductivity of the coating 100 is suitable, so that the coating 100 is particularly suitable for the cooking equipment, heat can be uniformly distributed on the surface of the cooking equipment when the cooking equipment is used for cooking, the problems of bottom pasting and pot sticking caused by too fast heat transfer do not occur, and the cooking effect is good.

According to an embodiment of the present disclosure, the oxygen content in the coating does not exceed 10 at%, so that the coating can be ensured to contain a high content of quasicrystalline, and it has a good non-stick property. According to some embodiments of the present disclosure, the oxygen content in the coating is 4-7 at%. Therefore, the metal elements in the coating can be further prevented from being oxidized to improve the quasicrystalline content in the coating. If the oxygen content is less than 4 at%, the quasicrystalline content is not obviously improved; and the difficulty of the preparation process is increased, and the production cost is further improved. Note that "at%" refers to atomic percentages.

According to an embodiment of the present disclosure, oxygen is inevitably incorporated into the coating during preparation or use, and the content of oxygen in the coating is not more than 10 at% based on the total amount of elements in the coating. Preferably, the oxygen content in the coating is 4-7 at%. Due to the fact that the oxygen content in the coating is low, the content of metal elements in the coating is increased; the coating is metallurgically bonded with a metal substrate, and the bonding force between the coating and the metal substrate can be increased; in addition, if the oxygen content is too high, the combination of oxygen and other metal elements is increased to change the types of crystalline phases in the coating, so that quasicrystalline phases cannot be formed in the coating, and therefore the non-stick property, the corrosion resistance and the hardness of the coating are greatly reduced.

In further embodiments of the present disclosure, referring to Fig. 3, each of the sub-coating layers may further include a plurality of secondary-coating layers. Taking a sub-coating layer 101a as an example, the sub-coating layer 101a may include secondary coating layers 1011a, 1011b, ···, 1011c, 1011d (it should be noted that Fig. 3 is merely an exemplary illustration of the structure of the sub-coating layer 101a and does not limit the number of the secondary-coating layer in the sub-coating layer 101a). Therefore, each sub-coating layer includes a plurality of secondary-coating layers, so that the thickness of the formed coating 100 is relatively thick, and the quasicrystalline material with a smaller particle size are prevented from filling gaps of the sub-coating layers formed by the quasicrystalline material with a larger particle size. Then, the quasicrystalline materials with smaller particle sizes in the upper sub-coating layers can fully exert the non-stick property of the quasicrystalline material, and the non-stick property of the coating 100 is further improved.

According to an embodiment of the present disclosure, each sub-coating layer may include 5-10 secondary-coating layers. In some specific embodiments of the present disclosure, the number of secondary-coating layers may be 5, 6, 7, 8, 9, or 10. Therefore, the thickness of each formed sub-coating layer is moderate, good non-stick property is guaranteed, avoiding waste of materials, with low cost and easy industrialization.

In another aspect of the present disclosure, the present disclosure provides a method for preparing the above-mentioned coating 100. According to an embodiment of the present disclosure, referring to Fig. 4, the method includes:
S1: sequentially forming a plurality of quasicrystalline material-containing sub-coating layers 101 d, 101 c, ···, 101 b, 101a from a lower position to an upper position by spraying; wherein the particle size of the quasicrystalline material in at least one sub-coating layer is greater than the particle size of the quasicrystalline material in the at least one sub-coating layer located above it (see Fig. 1 for a structural view of the formed coating 100). The present disclosure has the advantages that the method is simple and convenient to operate, easy to realize and easy for industrial production. The prepared coating 100 has a good non-stick property, a low cost, and a simple preparation process, and is easy to industrialize, and it is particularly suitable for cooking equipment.

Alternatively, it can also be as follows.

S1: sequentially forming a plurality of quasicrystalline material-containing sub-coating layers 101 d, 101 c, ···, 101 b, 101a from a lower position to an upper position by spraying; wherein, the particle sizes of the quasicrystalline materials forming at least two of the sub-coating layers 101a, 101b, ···, 101c, 101d are different, and the particle size of the quasicrystalline material forming the uppermost sub-coating layer 101a is minimum (see Fig. 1 for the structural view of the formed coating 100). The present disclosure has the advantages that the method is simple and convenient to operate, easy to realize and easy for industrial production. The prepared coating 100 has a good non-stick property, a low cost, and a simple preparation process, and is easy to industrialize, and it is particularly suitable for cooking equipment.

According to an embodiment of the present disclosure, it is preferable that the particle size of the quasicrystalline material forming the uppermost sub-coating layer is minimum (it should be noted that the minimum here means that the particle size of the quasicrystalline material forming the uppermost sub-coating layer 101a is minimum among the quasicrystalline materials forming the plurality of the sub-coating layers). As described above, it can also be said here that the particle size of the quasicrystalline material in the uppermost sub-coating layer is minimum among the plurality of the sub-coating layers. Due to the fact that the particle size of the quasicrystalline material forming the uppermost sub-coating layer is minimum, the uppermost sub-coating layer is denser, and the non-stick property of the coating layer can be further improved; and the quasicrystalline material with the large particle size is matched with the quasicrystalline material with the small particle size, so that the formed coating has a good wear resistance and non-stick property, which is particularly suitable for the cooking equipment.

According to an embodiment of the present disclosure, it is preferable that the particle size of the quasicrystalline material forming the lowermost sub-coating layer is maximum (it should be noted that the maximum here means that the particle size of the quasicrystalline material forming the lowermost sub-coating layer 101d is maximum among the quasicrystalline materials forming the plurality of the sub-coating layers). As described above, it can also be said here that the particle size of the quasicrystalline material in the lowermost sub-coating layer is maximum among the plurality of the sub-coating layers. Due to the fact that the particle size of the quasicrystalline material forming the lowermost sub-coating layer at the moment is maximum, the coating has stronger and better bonding force with the base material, the porosity can be further increased, and the thermal conductivity is further reduced, so that the base material can uniformly conduct heat, the phenomenon of local overheating is further reduced, and the burnt pot is prevented.

According to the embodiment of the present disclosure, the preparation method of the quasicrystalline material is not particularly limited, and a person skilled in the art would be able to flexibly select according to requirements as long as the requirements are met. In some embodiments of the present disclosure, the preparation method of the quasicrystalline material may be powder atomization, the specific process of powder atomization is not limited, and a person skilled in the art would be able to flexibly select according to practical requirements. In some embodiments of the present disclosure, the alloy ingot is melted to a liquid at 1000-1200°C, after which the molten liquid is impinged in a rapidly moving fluid or otherwise broken into fine droplets (atomizing medium), followed by condensation to solid powder. Therefore, the process is mature, easy to operate and easy for industrial production.

According to an embodiment of the present disclosure, in order to increase the powder yield at the time of spraying, the step of spheroidizing the quasicrystalline powder may be further included before spraying the quasicrystalline powder on the surface of the substrate. Therefore, when the spraying is performed in a subsequent step, it is more favorable for the powder yield of the quasicrystalline powder.

According to an embodiment of the present disclosure, in order to improve the adhesive force of the quasi crystalline powder on the substrate, it can further include the step of cleaning the surface of the substrate before spraying. The specific cleaning method is not limited, so long as the stains, oil stains, rust and the like on the surface of the substrate can be cleaned to meet the spraying requirement. In an embodiment of the present disclosure, the surface of the substrate can be cleaned and dried by means of alcohol, trichloroethylene or pure water plus ultrasonic waves and the like, and it is required that rust and the like cannot be generated on the surface of the substrate before spraying. In this way, the adhesion of quasicrystalline powder on the substrate can be greatly improved by spraying after cleaning. In some embodiments of the present disclosure, in order to further improve the adhesion of the quasicrystalline powder to the substrate and extend the use life of the quasicrystalline coating, and the substrate surface may be roughened by sanding after the cleaning step.

According to an embodiment of the present disclosure, because of the intrinsic brittleness and low adhesion of quasicrystalline, it is difficult to produce quasicrystalline with good properties using low temperature spraying (e.g., cold spraying). Therefore, high temperature spraying, i.e., heating the quasicrystalline powder to a molten or semi-molten state and spraying at high speed onto the surface of the substrate to form a strongly adherent coating; and the spraying may include, but is not limited to, plasma spraying, arc spraying, flame spraying, etc. Therefore, the method is simple and convenient to operate, easy to realize and easy for industrial production.

According to an embodiment of the present disclosure, the process conditions of the plasma spraying may be a power of 30-50 kw, a main gas flow of 50-60 L/min, an auxiliary gas flow of 20-30 L/min, and a powder feeding amount of 15-20 g/min. In some specific embodiments of the present disclosure, the power may be 30 kw, 40 kw, 50 kw, etc; the main air flow can be 50 L/min, 55 L/min, 60 L/min and the like; the auxiliary air flow can be 20 L/min, 25 L/min, 30 L/min and the like; and the powder feeding amount may be 15 g/min, 16 g/min, 17 g/min, 18 g/min, 19 g/min, 20 g/min, and the like. Thus, a coating 100 with moderate thickness and better performance can be formed.

In other embodiments of the present disclosure, referring to Fig. 4, after performing the spraying described in S1, it may further include:
S2: annealing the coating.

According to an embodiment of the present disclosure, in order to obtain a coating with a high content of quasicrystalline material on the basis of ensuring the coating quality, the annealing temperature is 600°C -800°C, such as 600°C, 650°C, 700°C, 750°C or 800°C. Thus, by annealing in the temperature range, the amorphous phase converted by spraying in the coating can be converted into the quasicrystalline again at high temperature, quasi crystalline seeds in the coating can grow into quasicrystalline grains, and the quality of the coating can not be affected; if the temperature is lower than 600°C, the amorphous phase is not possible to be converted into the quasicrystalline; nonetheless, the quasicrystalline content in the coating is improved compared with that of the coating before the annealing; if the temperature is higher than 800°C, although the content of the quasicrystalline material in the coating can be greatly improved, too high temperature can cause too high thermal stress in the coating during the annealing, and the too high thermal stress can cause cracking of the coating, relatively poor non-stick property and affect quality and service performance of the coating.

According to an embodiment of the present disclosure, since the coating contains an easily oxidized metal element such as aluminum, the annealing may optionally be performed under vacuum or under a protective atmosphere such as nitrogen or argon. Therefore, the easily oxidized metal element such as aluminum and the like can be protected from being oxidized in the annealing process, and the content of the quasicrystalline material in the coating is further improved.

According to an embodiment of the present disclosure, in order to obtain the coating with the best usability and higher quasicrystalline material content, the annealing conditions are as follows: the heating rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min for a heat preservation time of 0.5-10 hours, such as 0.5 hours, 1 hour, 3 hours, 5 hours, 7 hours, 9 hours or 10 hours; the cooling rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min, with the temperature cooled to 200-300°C, such as 200°C, 230°C, 250°C, 270°C or 300°C, followed by furnace cooling to room temperature. Therefore, the content of the quasicrystalline material in the coating can be improved to the greatest extent, and the non-stick property of the coating can be improved to the greatest extent. In addition, if the heating rate or the cooling rate is too low, the process time can be prolonged; if the heating rate or the cooling rate is too fast, the quality of the coating can be affected, such as cracking and the like; if the heat preservation time is too short, the amorphous phase cannot be fully converted into the quasicrystalline, or crystal seeds cannot be completely grown into crystal grains; and if the heat preservation time is too long, the coating may be cracked.

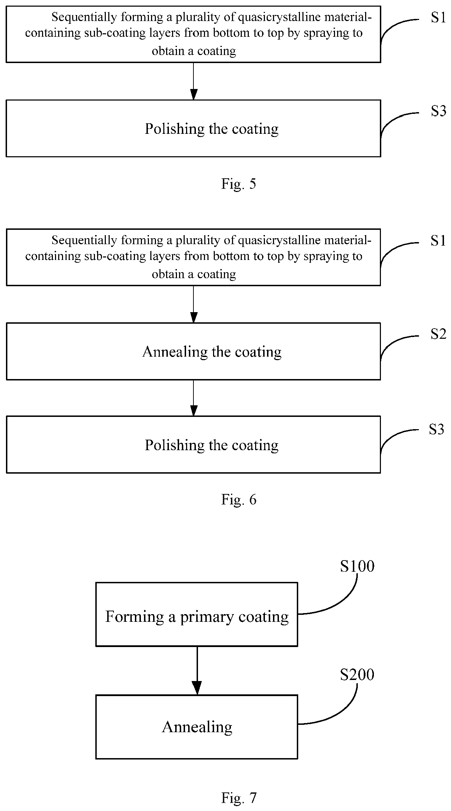

In still other embodiments of the present disclosure, referring to Fig. 5, after performing the spraying described in S1, it may further include:
S3: polishing the coating.

According to an embodiment of the present disclosure, the surface roughness of the upper surface of the coating 100 of the present disclosure is less than 2 microns. In some specific embodiments of the present disclosure, the surface roughness of the upper surface of the coating 100 may be 0.5 microns, 1 micron, 1.5 microns, etc. Thus, the surface roughness of the upper surface of the coating 100 is low, and the coating 100 can further have a better non-sticking property.

In still other embodiments of the present disclosure, referring to Fig. 6, after performing the spraying described in S1, it includes both annealing the coating (S2) and polishing the coating (S3), and the annealing the coating and polishing the coating are the same as described above, and further detailed description thereof will be omitted.

In another aspect of the present disclosure, a coating is provided. According to an embodiment of the present disclosure, the coating includes a plurality of quasicrystalline material-containing sub-coating layers stacked from a lower position to an upper position, wherein the porosity of the quasicrystalline material in at least one sub-coating layer is greater than the porosity of the quasicrystalline material in the at least one sub-coating layer located above it (see Fig. 1, for example, specifically, the porosity of the quasicrystalline material in the sub-coating layer 101d is greater than the porosity of the quasicrystalline material in the sub-coating layer 101c; the porosities of the quasicrystalline material in the respective sub-coating layers are independent of each other and do not affect each other, and the porosities of the quasicrystalline material in the sub-coating layers 101a and 101b are not particularly limited). The inventors have found that the porosity of the lower layer of the coating is higher than that of the upper layer. Due to the fact that the porosity of the lower layer is higher, the heat conduction performance of the sub-coating layer can be reduced, so that the substrate can uniformly conduct heat, the phenomenon of local overheating is reduced, and the burnt pot is prevented. The porosity of the upper layer is small, so that a denser sub-coating layer can be obtained, a superhydrophobic structure can be formed, stress concentration can be reduced, and almost no coating crack is generated. In addition, the quasicrystalline coating has larger hardness, lower friction coefficient, and abrasion and corrosion resistance, and can realize a better non-stick property.

According to an embodiment of the present disclosure, referring to Fig. 1, the porosity of the quasicrystalline material forming the uppermost sub-coating layer 101a is minimum in the quasicrystalline material forming the plurality of the sub-coating layers. Therefore, the porosity of the quasicrystalline material forming the uppermost sub-coating layer is minimum, so that the thermal conductivity of the sub-coating layer can be further reduced, the base material can further uniformly conduct heat, the phenomenon of local overheating is further reduced, and the burnt pot is prevented.

According to an embodiment of the present disclosure, referring to Fig. 1, the porosity of the quasi crystalline material forming the lowermost sub-coating layer 101d is maximum in the quasicrystalline material forming the plurality of the sub-coating layers. Therefore, the porosity of the quasicrystalline material forming the lowermost sub-coating layer is maximum, a denser sub-coating layer can be further obtained, a superhydrophobic structure can be further formed, stress concentration can be remarkably reduced, and almost no coating crack is generated. In addition, the quasicrystalline coating has larger hardness, lower friction coefficient, and abrasion and corrosion resistance, and can realize a better non-stick property.

In still other embodiments of the present disclosure, referring to Fig. 1, the porosity of the quasicrystalline material forming the sub-coating layers 101d, 101c, ···, 101b, 101a from a lower position to an upper position is reduced in a gradient manner. Therefore, the porosity of the quasi crystalline material forming the sub-coating layers 101d, 101c, ···, 101b, 101a from a lower position to an upper position is reduced in a gradient manner, so that the thermal conductivity of the sub-coating layers can be further reduced, the substrate can further uniformly conduct heat, the phenomenon of local overheating is further reduced, and the burnt pot is prevented. Moreover, a denser sub-coating layer can be further obtained, a superhydrophobic structure can be further formed, stress concentration can be remarkably reduced, and almost no coating crack is generated. In addition, the quasicrystalline coating has larger hardness, lower friction coefficient, and abrasion and corrosion resistance, and can realize a better non-stick property.

In yet another aspect of the present disclosure, referring to Figs. 7-10, another method for forming the quasicrystalline coating is provided. According to an embodiment of the present disclosure, the method includes:
S100: forming a primary coating; or enabling a plurality of groups of quasicrystalline powders with different particle sizes to bestackedon a substrate from a lower position to an upper position to form a plurality of quasicrystalline material-containing sub-primary coating layers on a substrate, in order to obtain a primary coating.

In this step, the primary coating is formed on the substrate based on the quasicrystalline powder. According to embodiments of the present disclosure, the primary coating may be formed on the substrate based on the quasicrystalline powder by any method well known to those skilled in the art.

S200: annealing; or annealing the primary coating to obtain the coating comprising a plurality of sub-coating layers, wherein the particle size of the quasicrystalline material in at least one sub-coating layer is greater than the particle size of the quasicrystalline material in the at least one sub-coating layer located above it.

In this step, the primary coating is annealed to obtain a coating. The inventors have found that the forming the primary coating on the substrate converts at least a portion of the quasicrystalline in the quasicrystalline powder to an amorphous phase. By annealing the primary coating, quasicrystalline seeds in the primary coating can be converted into the quasicrystalline again, so that the quasicrystalline content in the obtained coating is improved.

According to an embodiment of the present disclosure, referring to Fig. 1, the formed coating 100 includes a plurality of quasicrystalline material-containing sub-coating layers 101d, 101c, ···, 101b, 101a are stacked from a lower position to an upper position, wherein the particle size of the quasicrystalline material in at least one sub-coating layer is greater than the particle size of the quasicrystalline material in the at least one sub-coating layer located above it. Therefore, the quasicrystalline material with a larger particle size is formed as a lower layer of the coating 100, and then the quasicrystalline material with smaller particle size is formed as an upper layer of the coating 100, so that the coating 100 has a good non-stick property, a low cost, a simple preparation process, and is easy to industrialize, and is particularly suitable for the cooking equipment.

According to an embodiment of the present disclosure, the annealing is performed in an inert gas atmosphere or a vacuum, and the temperature of the annealing is 600-800°C, such as, 600°C, 650°C, 700°C, 750°C or 800°C. Thus, by annealing in the temperature range, the amorphous phase in the primary coating can be converted into the quasicrystalline again at high temperature, quasicrystalline seeds in the primary coating grow into quasicrystalline grains, and the quality of the coating is not affected; if the temperature is lower than 600°C, the amorphous phase is not possible to be converted into the quasicrystalline; nonetheless, the quasicrystalline content in the coating is improved compared with that of the primary coating before the annealing; if the temperature is higher than 800°C, the content of the quasicrystalline in the primary coating can be greatly improved; however, in the annealing process, too high temperature can lead to too high thermal stress in the coating, and the too high thermal stress can cause cracking of the coating, so that the quality and the service performance of the coating are seriously affected, and the non-stick property of the quasicrystalline coating is also affected.

According to an embodiment of the present disclosure, since the primary coating contains an easily oxidized metal element such as aluminum, the annealing is performed under vacuum or a protective atmosphere such as nitrogen or argon. Therefore, the easily oxidized metal element such as aluminum and the like can be protected from being oxidized in the annealing process, and the content of quasicrystalline in the obtained coating is further improved.

According to some embodiments of the present disclosure, after the annealing, the oxygen content in the coating does not exceed 10 at%, so that the quasicrystalline coating can be ensured to contain a high content of quasicrystalline,and it has a good non-stick property. According to some embodiments of the present disclosure, the oxygen content in the coating is 4-7 at%. Therefore, the metal elements in the coating can be further prevented from being oxidized to improve the quasicrystalline content in the coating. If the oxygen content is less than 4 at%, the quasicrystalline content is not obviously improved; and the difficulty of the preparation process is increased, and the production cost is further improved. Note that "at%" refers to atomic percentages.

According to an embodiment of the present disclosure, oxygen is inevitably incorporated into the coating during preparation or use, and the content of oxygen in the coating is not more than 10 at% based on the total amount of elements in the coating. Preferably, the oxygen content in the coating is 4-7 at%. Due to the fact that the oxygen content in the coating is low, the content of metal elements in the coating is increased; the coating is metallurgically bonded with a metal substrate, and the bonding force between the coating and the metal substrate can be increased; in addition, if the oxygen content is too high, the combination of oxygen and other metal elements is increased to change the types of crystalline phases in the coating, so that quasicrystalline phases cannot be formed in the coating, and therefore the non-stick property, the corrosion resistance and the hardness of the coating are greatly reduced.

According to the embodiment of the present disclosure, in order to obtain the coating with the best usability and higher quasicrystalline content, the annealing conditions are as follows: the heating rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min for a heat preservation time of 0.5-10 h, such as 0.5 h, 1 h, 3 h, 5 h, 7 h, 9 h or 10 h; the cooling rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min, with the temperature cooled to 200-300°C, such as 200°C, 230°C, 250°C, 270°C or 300°C, followed by furnace cooling to room temperature. Therefore, the content of the quasicrystalline in the primary coating can be improved to the greatest extent, and other performances such as the non-stick property of the coating can be improved to the greatest extent. In addition, if the heating rate or the cooling rate is too fast, the quality of the coating can be affected, such as cracking of the coating and the like; if the heat preservation time is too short, the amorphous phase cannot be fully converted into the quasicrystalline, or crystal seeds cannot be completely grown into crystal grains; of course, the quasi crystalline content of the annealed coating is improved compared with that of the primary coating which is not annealed; and if the heat preservation time is too long, the coating may may be cracked.

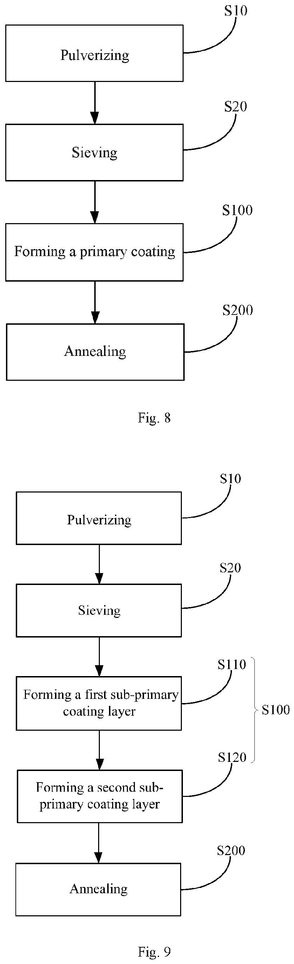

According to an embodiment of the present disclosure, referring to Fig. 8, it further includes before S100:
S10: pulverization step

The step includes pulverizing a quasicrystalline alloy ingot to obtain quasicrystalline alloy powder

According to an embodiment of the present disclosure, the quasicrystalline alloy ingot is formed by smelting a mixture comprising at least one of an aluminum material, a copper material, an iron material, and a chromium material. Thus, the obtained quasicrystalline alloy ingot is more suitable for subsequent coating formation.

According to the embodiment of the present disclosure, the atomic percentages of aluminum, copper, iron and chromium in the mixture are as follows: 60-70% of aluminum, 10-25% of copper, 5-15% of iron, 5-15% of chromium; alternatively, the mixture contains 60-70% of aluminum, 10-25% of copper, 5-15% of iron, 5-15% of chromium by atomic percentage. Thereby, the obtained coating with higher quasicrystalline content can be obtained.

According to an embodiment of the present disclosure, the aluminum material is pure aluminum, the copper material is pure copper, the iron material is pure iron, and the chromium material is pure chromium or a chromium titanium alloy. The inventors have found that by using a chromium-titanium alloy as a chromium material for preparing a quasicrystalline alloy ingot, that is, by adding an appropriate amount of titanium element to the quasicrystalline, the intergranular corrosion tendency of the quasicrystalline alloy can be further reduced, thereby further improving the corrosion resistance thereof. According to the embodiment of the present disclosure, the aluminum material, the copper material, the iron material and the chromium material can all adopt conventional products obtained by commercial purchase.

According to an embodiment of the present disclosure, the processing method for preparing the quasicrystalline alloy ingot into quasicrystalline alloy powder is not particularly limited, and a person skilled in the art would be able to flexibly select according to practical requirements. According to a preferred embodiment of the present disclosure, the quasicrystalline alloy ingot can be prepared into quasicrystalline alloy powder by powder atomization, and thus the prepared quasicrystalline alloy powder is more suitable for subsequent use in forming a coating.

S20: sieving step.

The step includes sieving the quasicrystalline alloy powder to obtain a plurality of groups of quasicrystalline powder with different particle sizes.

Further, the plurality of groups of quasicrystalline powder with different particle sizes comprise a first powder and a second powder, the particle size of the first powder particles being less than the particle size of the second powder particle; alternatively, the first powder and the second powder are selected from the quasicrystalline alloy powder. In some embodiments of the present disclosure, at least 90% of the particles in the first powder have a particle size not greater than 80 µm, and at least 90% of the particles in the second powder have a particle size greater than 80 µm.

According to an embodiment of the present disclosure, the quasicrystalline powder having a particle size that does not meet the coating preparation requirements may be used to prepare a quasicrystalline alloy ingot. In some embodiments of the present disclosure, the second powder selected from the quasicrystalline alloy powder may be used to prepare a quasicrystalline alloy ingot. The inventors have found that the second powder has a larger particle size relative to the first powder, and if the second powder is directly used to form the quasicrystalline coating, the corrosion resistance of the quasicrystalline coating is greatly affected. By recycling the second powder for preparing the quasicrystalline alloy ingot, the utilization rate of resources can be obviously improved.

Further, according to embodiments of the present disclosure, the first powder and the second powder may be further sieveed such that at least 90% of the particles in the first powder have a particle size of not less than 20 µm, and at least 90% of the particles in the second powder have a particle size of not greater than 150 µm. That is, by further sieving the first powder and the second powder, at least 90% of the particles in the first powder have a particle size of not less than 20 µm and not greater than 80 µm, and at least 90% of the particles in the second powder have a particle size of greater than 80 µm and not greater than 150 µm . Therefore, grading utilization of the first powder and the second powder can be further facilitated.

According to an embodiment of the present disclosure, referring to Fig. 9, S100 further includes:
S110: forming a first sub-primary coating layer.
   The step includes forming a first sub-primary coating layer by the second powder on the substrate based on the second powder with at least 90% of the particles having a particle size of greater than 80 µm and not greater than 150 µm .
S120: forming a second sub-primary coating layer.

The step includes forming a second sub-primary coating layer by the first powder on a surface of the first sub-primary coating layer away from the substrate with at least 90% of the particles having a particle size of not less than 20 µm and not greater than 80 µm, thereby obtaining the primary coating including the first sub-primary coating layer and the second sub-primary coating layer.

The inventors have found that although the direct use of a quasicrystalline powder with a larger particle size (i.e. a second powder) in forming a coating may have some adverse effects on the coating properties, the second powder can be effectively utilized on the premise that the performance of an outer coating is not affected by forming a first sub-primary coating layer on a substrate by using the second powder, and forming an outer layer, i.e. a second sub-primary coating layer, on the first sub-primary coating layer by using the quasicrystalline powder with a smaller particle size (i.e. the first powder), and the utilization rate of resources is improved. In addition, the first sub-primary coating layer formed on the basis of the second powder has a certain porosity, so that the thermal conductivity of the coating layer can be further reduced, the surface temperature of the substrate formed with the coating layer is more uniform, and the non-stick property of the coating layer can be helped to a certain extent. The second sub-primary coating layer formed outside the first sub-primary coating layer by using the first powder with the smaller particle size has a higher density, so that the adverse effect of the larger porosity of the first sub-primary coating layer on the coating layer can be effectively eliminated. The quasicrystalline powder having a particle size of less than 20 µm or greater than 150 µm can be recycled for use in the preparation of quasicrystalline alloy ingots.

According to an embodiment of the present disclosure, the first sub-primary coating layer and the second sub-primary coating layer are formed by a spraying method. In other embodiments, the first sub-primary coating layer and the second sub-primary coating layer may also be formed by melt spraying, physical vapor deposition, and the like. Preferably, the first sub-primary coating layer and the second sub-primary coating layer are formed by a plasma spraying method. Therefore, the first sub-primary coating layer and the second sub-primary coating layer can be effectively formed on the substrate. The process is mature, easy to operate and easy for industrial production.

According to an embodiment of the present disclosure, the conditions of the plasma spraying method include the arc power of 25-50 kW and the arc voltage of 40-50 V. Thereby, the first sub-primary coating layer and the second sub-primary coating layer having a better property can be formed.

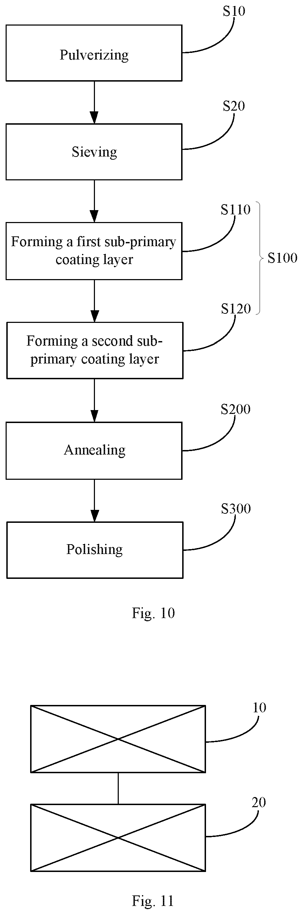

According to an embodiment of the present disclosure, referring to Fig. 10, the method for forming the coating of the present disclosure further includes after step (2):
S300: polishing.

The step includes polishing the coating. According to an embodiment of the present disclosure, the coating may be manually or mechanically polished to a finish degree of Ra = 0.08-1.25 µm, thereby further improving the appearance of the coating.

In yet another aspect of the present disclosure, the present disclosure provides a system for performing the method for forming the coating of the embodiments described above. According to an embodiment of the present disclosure, referring to Fig. 11, the system includes a spraying device 10 or an annealing device 20. The spraying device 10 is configured to spray the quasicrystalline powder on the surface of the substrate so as to obtain a primary coating; and the annealing device 20 is configured to anneal the primary coating so as to obtain the coating.

According to the system for forming the coating, it first uses a spraying device to spray the quasicrystalline powder onto the substrate surface to form a primary coating on the substrate surface. The primary coating is subjected to annealing by using an annealing device to convert quasicrystalline seed crystals in the primary coating into quasicrystalline, thereby further improving the quasicrystalline content in the coating. The coating thus formed has excellent surface properties of high hardness, low friction coefficient, abrasion and corrosion resistance, and the like. Thus, the coating-forming system of the present disclosure can effectively form a coating having the above-mentioned advantages while having the advantage of low preparation cost.

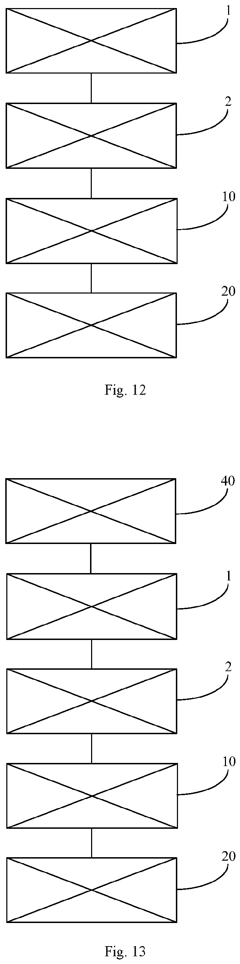

A system for forming the coating according to an embodiment of the present disclosure is described in detail below with reference to Figs. 12-16:
According to an embodiment of the present disclosure, the spraying device 10 is configured to spray the quasicrystalline powder on the surface of the substrate so as to obtain a primary coating. According to embodiments of the present disclosure, the primary coating may be formed on the substrate based on the quasicrystalline powder by any method well known to those skilled in the art.

According to an embodiment of the present disclosure, the annealing device 20 is connected to the spraying device 10 and is configured to anneal the primary coating so as to obtain the coating. The inventors have found that the forming the primary coating on the substrate converts at least a portion of the quasicrystalline in the quasicrystalline powder to an amorphous phase. By annealing the primary coating, quasicrystalline seeds in the primary coating can be converted into the quasicrystalline again, so that the quasicrystalline content in the obtained coating is improved.

According to an embodiment of the present disclosure, the annealing is performed in an inert gas atmosphere or a vacuum, and the temperature of the annealing is 600-800°C, such as, 600°C, 650°C, 700°C, 750°C or 800°C. Thus, by annealing in the temperature range, the amorphous phase in the primary coating can be converted into the quasicrystalline again at high temperature, quasicrystalline seeds in the primary coating grow into quasicrystalline grains, and the quality of the coating is not affected; if the temperature is lower than 600°C, the amorphous phase is not possible to be converted into the quasicrystalline; nonetheless, the quasicrystalline content in the coating is improved compared with that of the primary coating before the annealing; if the temperature is higher than 800°C, the content of the quasicrystalline in the primary coating can be greatly improved; however, in the annealing process, too high temperature can lead to too high thermal stress in the coating, and the too high thermal stress can cause cracking of the coating, so that the quality and the service performance of the coating are seriously affected, and the non-stick property of the coating is also affected.

According to an embodiment of the present disclosure, since the primary coating contains an easily oxidized metal element such as aluminum, the annealing is performed under vacuum or a protective atmosphere such as nitrogen or argon. Therefore, the easily oxidized metal element such as aluminum and the like can be protected from being oxidized in the annealing process, and the content of quasicrystalline in the obtained coating is further improved.

According to some embodiments of the present disclosure, after the annealing, the oxygen content in the coating does not exceed 10 at%, so that the coating can be ensured to contain a high content of quasicrystalline,and it has a good non-stick property. According to some embodiments of the present disclosure, the oxygen content in the coating is 4-7 at%. Therefore, the metal elements in the coating can be further prevented from being oxidized to improve the quasicrystalline content in the coating. If the oxygen content is less than 4 at%, the quasicrystalline content is not obviously improved; and the difficulty of the preparation process is increased, and the production cost is further improved. Note that "at%" refers to atomic percentages.

According to an embodiment of the present disclosure, oxygen is inevitably incorporated into the quasicrystalline coating during preparation or use, and the content of oxygen in the coating is not more than 10 at% based on the total amount of elements in the coating. Preferably, the oxygen content in the coating is 4-7 at%. Due to the fact that the oxygen content in the coating is low, the content of metal elements in the coating is increased; the coating is metallurgically bonded with a metal substrate, and the bonding force between the coating and the metal substrate can be increased; in addition, if the oxygen content is too high, the combination of oxygen and other metal elements is increased to change the types of crystalline phases in the coating, so that quasicrystalline phases cannot be formed in the coating, and therefore the non-stick property, the corrosion resistance and the hardness of the coating are greatly reduced.

According to the embodiment of the present disclosure, in order to obtain the coating with the best usability and higher quasicrystalline content, the annealing conditions are as follows: the heating rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min for a heat preservation time of 0.5-10 h, such as 0.5 h, 1 h, 3 h, 5 h, 7 h, 9 h or 10 h; the cooling rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min, with the temperature cooled to 200-300°C, such as 200°C, 230°C, 250°C, 270°C or 300°C, followed by furnace cooling to room temperature. Therefore, the content of the quasicrystalline in the primary coating can be improved to the greatest extent, and other performances such as the non-stick property of the coating can be improved to the greatest extent. In addition, if the heating rate or the cooling rate is too fast, the quality of the coating can be affected, such as cracking of the coating and the like; if the heat preservation time is too short, the amorphous phase cannot be fully converted into the quasicrystalline, or crystal seeds cannot be completely grown into crystal grains; of course, the quasicrystalline content of the annealed coating is improved compared with that of the primary coating which is not annealed; and if the heat preservation time is too long, the coating may may be cracked.

According to an embodiment of the present disclosure, referring to Fig. 12, the system for forming the coating of the present disclosure further includes a pulverizing device 1 and a sieving device 2. The pulverizing device 1 is configured to pulverize the quasicrystalline alloy ingot so as to obtain quasicrystalline alloy powder.

According to an embodiment of the present disclosure, the kind of the pulverizing device 1 is not particularly limited, and a person skilled in the art would be able to flexibly select according to practical requirements. According to a preferred embodiment of the present disclosure, the pulverizing device 1 may be a powder atomization device, and the thus-prepared quasicrystalline alloy powder is more suitable for subsequent use in forming a coating.

According to an embodiment of the present disclosure, the quasicrystalline alloy ingot is formed by smelting a mixture comprising at least one of an aluminum material, a copper material, an iron material, and a chromium material. Thus, the obtained quasicrystalline alloy ingot is more suitable for subsequent coating formation.

According to the embodiment of the present disclosure, the atomic percentages of aluminum, copper, iron and chromium in the mixture are as follows: 60-70% of aluminum, 10-25% of copper, 5-15% of iron, 5-15% of chromium; alternatively, the mixture contains 60-70% of aluminum, 10-25% of copper, 5-15% of iron, 5-15% of chromium by atomic percentage. Thereby, the obtained coating with higher quasicrystalline content can be obtained.

According to an embodiment of the present disclosure, the aluminum material is pure aluminum, the copper material is pure copper, the iron material is pure iron, and the chromium material is pure chromium or a chromium titanium alloy. When a chromium-titanium alloy is used to form the quasicrystalline alloy ingot, a titanium element is correspondingly included in the quasicrystalline alloy ingot. The inventors have found that by using a chromium-titanium alloy as a chromium material for preparing a quasicrystalline alloy ingot, that is, by adding an appropriate amount of titanium element to the quasicrystalline, the intergranular corrosion tendency of the quasicrystalline alloy can be further reduced, thereby further improving the corrosion resistance thereof. According to the embodiment of the present disclosure, the aluminum material, the copper material, the iron material and the chromium material can all adopt conventional products obtained by commercial purchase.

According to an embodiment of the present disclosure, the sieving device 2 is connected with the pulverizing device 1 and the spraying device 10, and the sieving device 2 is configured to sieve the quasicrystalline alloy powder so as to obtain a plurality of groups of quasicrystalline powder with different particle sizes. In some embodiments of the present disclosure, the plurality of groups of quasicrystalline powders having different particle sizes include a first powder and a second powder (and hereinafter, description will be made with respect to the plurality of groups of quasicrystalline powder having different particle sizes including the first powder and the second powder; of course, those skilled in the art will appreciate that the system of the present disclosure is applicable not only to a plurality of groups of quasicrystalline powder having different particle sizes including the first powder and the second powder, but also to a plurality of groups of quasicrystalline powder having different particle sizes, wherein at least 90% of the particles in the first powder have a particle size not greater than 80 µm and at least 90% of the particles in the second powder have a particle size greater than 80 µm . The spraying device is configured to form a primary coating on the substrate on the basis of the plurality of groups of quasicrystalline powder with different particle sizes. In particular, the plurality of groups of quasicrystalline powder with different particle sizes can include the first powder and the second powder. The inventors have found that the second powder has a larger particle size relative to the first powder, and if the second powder is directly used to form the primary coating, the corrosion resistance of the quasicrystalline coating is greatly affected. By recycling the second powder for preparing the quasicrystalline alloy ingot, the utilization rate of resources can be obviously improved.

According to an embodiment of the present disclosure, referring to Fig. 13, the system for forming the coating of the present disclosure further includes a smelting device 40. The smelting device 40 is connected to the pulverizing device 1 and configured to smelt a mixture containing at least one of an aluminum material, a copper material, an iron material and a chromium material so as to obtain a quasicrystalline alloy ingot.

According to an embodiment of the present disclosure, the smelting device 40 may be a medium-frequency induction furnace.

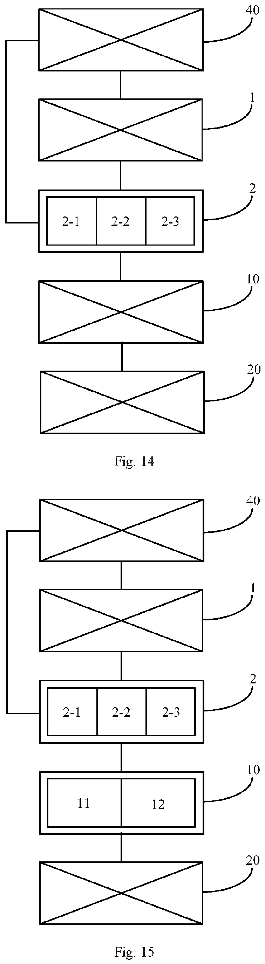

According to an embodiment of the present disclosure, with reference to Fig. 14, the sieving device 2 includes a first sieving unit 2-1 in which a 700-mesh sieve is arranged, a second sieving unit 2-2 in which a 180-mesh sieve is arranged, and a third sieving unit 2-3 in which a 100-mesh sieve is arranged. Thus, by cooperation of the first to third sieving units, the quasicrystalline alloy powder can be sieved to obtain a first powder in which at least 90% of the particles have a particle size of not less than 20 µm and not greater than 80 µm, and a second powder in which at least 90% of the particles have a particle size of greater than 80 µm and not greater than 150 µm. At the same time, a person skilled in the art would understand that it is also possible to sieve to obtain powder having a particle size of less than 20 µm and a particle size of greater than 150 µm by using the first to third sieving units. In addition, those skilled in the art will understand that although a plurality of groups of quasicrystalline powder with different particle sizes including the first powder and the second powder are illustrated herein, the sieving device 2 of the present disclosure is also configured to sieve the quasicrystalline alloy powder to obtain the plurality of groups of quasicrystalline powder with different particle sizes.

According to an embodiment of the present disclosure, with reference to Fig. 15, the spraying device 10 includes a first sub-primary coating layer spraying unit 11 configured to form a first sub-primary coating layer on a substrate using a second powder with at least 90% of the particles having a particle size of greater than 80 µm and not greater than 150 µm, and a second sub-primary coating layer spraying unit 12; the second sub-primary coating layer spraying unit 12 is configured to form a second sub-primary coating layer on a surface of the first sub-primary coating layer away from the substrate using the first powder with at least 90% of the particles having a particle size of not less than 20 µm and not greater than 80 µm, thereby obtaining the primary coating including the first sub-primary coating layer and the second sub-primary coating layer (it should be noted that although the plurality of groups of quasicrystalline powders having different particle sizes are illustrated herein as including the first powder and the second powder, the spraying device 10 of the present disclosure is equally applicable to forming the plurality of quasicrystalline material-containing sub-primary coating layers on the substrate by using the plurality of groups of quasicrystalline powder having different particle sizes). The inventors have found that although the direct use of a quasicrystalline powder with a larger particle size (i.e. a second powder) in forming a coating may have some adverse effects on the coating properties, the second powder can be effectively utilized on the premise that the performance of an outer coating is not affected by forming a first sub-primary coating layer on a substrate by using the second powder, and forming an outer layer, i.e. a second sub-primary coating layer, on the first sub-primary coating layer by using the quasicrystalline powder with a smaller particle size (i.e. the first powder), and the utilization rate of resources is improved. In addition, the first sub-primary coating layer formed on the basis of the second powder has a certain porosity, so that the thermal conductivity of the coating layer can be further reduced, the surface temperature of the substrate formed with the coating layer is more uniform, and the non-stick property of the coating layer can be helped to a certain extent. The coating formed outside the first sub-primary coating layer by using the first powder with the smaller particle size has a higher density, so that the adverse effect of the larger porosity of the first sub-primary coating layer on the coating layer can be effectively eliminated.

According to an embodiment of the present disclosure, the sieving device 2 may be connected to a smelting device 40. Thus, the quasicrystalline powder having a particle size of less than 20 µm or greater than 150 µm can be recycled for use in the preparation of quasicrystalline alloy ingots. The sieving device 2 is configured to convey the quasicrystalline powder having a particle size that does not meet coating preparation requirements to the smelting device.

According to an embodiment of the present disclosure, the spraying device 10 may be a plasma spraying device. Therefore, the first sub-primary coating layer and the second sub-primary coating layer can be effectively formed on the substrate by adopting the plasma spraying device. The process is mature, easy to operate and easy for industrial production.

According to the embodiment of the present disclosure, the working conditions of the plasma spraying device include the arc power of 25-50 kW and the arc voltage of 40-50 V. Thereby, the first sub-primary coating layer and the second sub-primary coating layer having a better property can be formed.

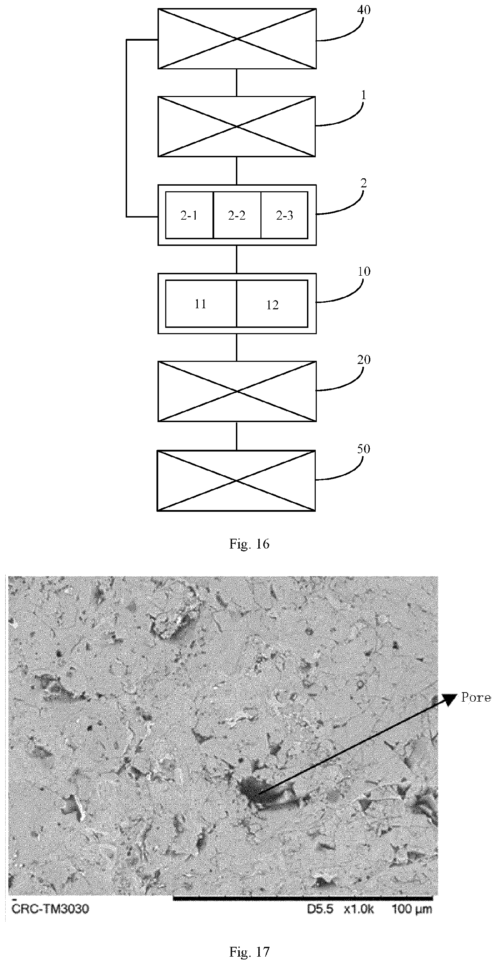

According to an embodiment of the present disclosure, referring to Fig. 16, the system for forming the coating of the present disclosure further includes a polishing device 50. The polishing device 50 is connected to the annealing device 20 and configured to polish the coating. The polishing is performed to the quasicrystalline coating by the polishing device 500, and the formed coating has a finish degree of Ra = 0.08-1.25 µm, thereby further improving the appearance of the coating. Thus, the appearance of the coating can be further improved.

In another aspect of the present disclosure, the present disclosure also provides a method for forming the quasicrystalline coating. According to an embodiment of the present disclosure, the method includes: (1) pulverizing a quasicrystalline alloy ingot by a pluverization step to obtain quasicrystalline alloy powder; and (2) sieving the quasicrystalline alloy powder by a sieving step to obtain a plurality of groups of quasicrystalline powder with different particle sizes, and preparing the quasicrystalline alloy ingot by using the quasicrystalline powder having a particle size that does not meet coating preparation requirements. In some embodiments of the present disclosure, the first powder and the second powder are selected from the quasicrystalline alloy powder, wherein at least 90% of the particles in the first powder have a particle size not greater than 80 µm, and at least 90% of the particles in the second powder have a particle size greater than 80 µm; and (3) forming a bottom layer (i.e. a first sub-primary coating layer) on the substrate based on the second powder; and forming a coating (i.e., a second sub-primary coating layer) on the surface of the bottom layer away from the substrate based on the first powder.

According to the method for forming the quasicrystalline coating, the quasicrystalline alloy powder is prepared by utilizing a quasicrystalline alloy ingot, then the quasicrystalline alloy powder is subjected to sieving, and the quasicrystalline coating is formed on the substrate by utilizing at least 90% of the particles of first powder having a particle size not greater than 80 µm. The quasicrystalline coating formed by adopting the first powder with the above-mentioned particle size is compact in structure, and low in surface roughness. It has high hardness, low friction coefficient, wear and corrosion resistance, and other excellent surface properties, and the advantage of low preparation cost.

Hereinafter, a method for forming a coating according to an embodiment of the present disclosure will be described in detail. According to an embodiment of the present disclosure, the method includes:
(1) pulverizing a quasicrystalline alloy ingot by a pluverization step to obtain quasicrystalline alloy powder.

According to an embodiment of the present disclosure, the quasicrystalline alloy ingot is formed by smelting a mixture comprising at least one of an aluminum material, a copper material, an iron material, and a chromium material. Thus, the obtained quasicrystalline alloy ingot is more suitable for subsequent coating formation.

According to the embodiment of the present disclosure, the atomic percentages of aluminum, copper, iron and chromium in the mixture are as follows: 60-70% of aluminum, 10-25% of copper, 5-15% of iron, 5-15% of chromium; alternatively, the mixture contains 60-70% of aluminum, 10-25% of copper, 5-15% of iron, 5-15% of chromium by atomic percentage. Thereby, the obtained quasicrystalline coating with higher quasicrystalline content can be obtained.

According to an embodiment of the present disclosure, the aluminum material is pure aluminum, the copper material is pure copper, the iron material is pure iron, and the chromium material is pure chromium or a chromium titanium alloy. When a chromium-titanium alloy is used to form the quasicrystalline alloy ingot, a titanium element is correspondingly included in the quasicrystalline alloy ingot. The inventors have found that by using a chromium-titanium alloy as a chromium material for preparing a quasicrystalline alloy ingot, that is, by adding an appropriate amount of titanium element to the quasicrystalline, the intergranular corrosion tendency of the quasicrystalline alloy can be further reduced, thereby further improving the corrosion resistance thereof. According to the embodiment of the present disclosure, the aluminum material, the copper material, the iron material and the chromium material can all adopt conventional products obtained by commercial purchase.

According to an embodiment of the present disclosure, the processing method for preparing the quasicrystalline alloy ingot into quasicrystalline alloy powder is not particularly limited, and a person skilled in the art would be able to flexibly select according to practical requirements. According to a preferred embodiment of the present disclosure, the quasicrystalline alloy ingot can be prepared into quasicrystalline alloy powder by powder atomization, and thus the prepared quasicrystalline alloy powder is more suitable for subsequent use in forming a coating.

(2) Sieving the quasicrystalline alloy powder by a sieving step to obtain a plurality of groups of quasicrystalline powder with different particle sizes; in some embodiments of the present disclosure, the first powder and the second powder are selected from the quasicrystalline alloy powder, wherein at least 90% of the particles in the first powder have a particle size not greater than 80 µm, and at least 90% of the particles in the second powder have a particle size greater than 80 µm .

According to the embodiment of the present disclosure, the quasicrystalline alloy powder is sieveed to obtain a plurality of groups of quasicrystalline powder with different particle sizes, and the quasicrystalline powder having a particle size that does not meet the preparation requirements of the coating are used for preparing a quasicrystalline alloy ingot. Specifically, the second powder selected from the quasicrystalline alloy powder may be used to prepare the quasicrystalline alloy ingot. The inventors have found that the second powder has a larger particle size relative to the first powder, and if the second powder is directly used to form the coating, the corrosion resistance of the coating is greatly affected. By recycling the second powder for preparing the alloy ingot, the utilization rate of resources can be obviously improved.

(3) Forming a bottom layer on the substrate based on the second powder; and forming a coating on the surface of the bottom layer away from the substrate based on the first powder.

According to an embodiment of the present disclosure, the first powder and the second powder may be further sieveed such that at least 90% of the particles in the first powder have a particle size of not less than 20 µm, and at least 90% of the particles in the second powder have a particle size of not greater than 150 µm. That is, by further sieving the first powder and the second powder, at least 90% of the particles in the first powder have a particle size of not less than 20 µm and not greater than 80 µm, and at least 90% of the particles in the second powder have a particle size of greater than 80 µm and not greater than 150 µm. Therefore, grading utilization of the first powder and the second powder can be further facilitated.

The inventors have found that although the direct use of a quasicrystalline powder with a larger particle size (i.e. a second powder) in forming a coating may have some adverse effects on the coating properties, the second powder can be effectively utilized on the premise that the performance of an outer coating is not affected by forming a bottom layer (i.e., a first sub-primary coating layer) on a substrate by using the second powder, and forming an outer layer (that is a second sub-primary coating layer), i.e., a coating, on the bottom layer by using the quasicrystalline powder with a smaller particle size (i.e. the first powder), and the utilization rate of resources is improved. In addition, the bottom layer formed on the basis of the second powder has a certain porosity, so that the heat conductivity of the coating can be further reduced, the surface temperature of the substrate formed with the coating is more uniform, and the non-stick property of the coating layer can be helped to a certain extent. The coating formed outside the bottom layer by using the first powder with the smaller particle size has a higher densit, so that the adverse effect of the larger porosity of the bottom layer on the coating can be effectively eliminated. The quasicrystalline powder having a particle size of less than 20 µm or greater than 150 µm (i.e., the quasicrystalline powder having a particle size that does not meet the preparation requirements of the coating) can be recycled for use in the preparation of quasicrystalline alloy ingots.

According to an embodiment of the present disclosure, the bottom layer and the coating are formed by a plasma spraying method. Therefore, the bottom layer and the coating can be effectively formed on the substrate. The process is mature, easy to operate and easy for industrial production.

According to an embodiment of the present disclosure, the conditions of the plasma spraying method include the arc power of 25-50 kW and the arc voltage of 40-50 V. Thus, the bottom layer and the coating can be formed with better performance.

According to an embodiment of the present disclosure, after the above-mentioned step (3), the method may further include:
(4) annealing the coating and the bottom layer formed in the step (3). The inventors have found that the forming the coating and bottom layer on the substrate by the plasma spraying method converts at least a portion of the quasicrystalline in the first powder and the second powder to an amorphous phase. By annealing the coating and the bottom layer, quasicrystalline seeds in the coating and the bottom layer can be converted into the quasicrystalline again, so that the quasicrystalline content in the coating and the bottom layer is improved.

According to an embodiment of the present disclosure, the annealing is performed in an inert gas atmosphere or a vacuum, and the temperature of the annealing is 600-800°C, such as, 600°C, 650°C, 700°C, 750°C or 800°C. Thus, by annealing in the temperature range, the amorphous phase in the bottom layer and the coating can be converted into the quasicrystalline again at high temperature, quasicrystalline seeds in the bottom layer and the coating grow into quasicrystalline grains, and the quality of the coating is not affected; if the temperature is lower than 600°C, the amorphous phase is not possible to be converted into the quasicrystalline; nonetheless, the quasicrystalline content in the coating is improved compared with that of the bottom layer and the coating before the annealing; if the temperature is higher than 800°C, the content of the quasicrystalline in the bottom layer and the coating can be greatly improved; however, in the annealing process, too high temperature can lead to too high thermal stress in the coating, and the too high thermal stress can cause cracking of the coating, so that the quality and the service performance of the coating are seriously affected, and the non-stick property of the coating is also affected.

According to an embodiment of the present disclosure, since the bottom layer and the coating layer contains an easily oxidized metal element such as aluminum, the annealing is performed under vacuum or a protective atmosphere such as nitrogen or argon. Therefore, the easily oxidized metal element such as aluminum and the like can be protected from being oxidized in the annealing process, and the content of quasicrystalline in the the bottom layer and the coating is further improved.

According to the embodiment of the present disclosure, in order to obtain the coating with the best usability and higher quasicrystalline content, the annealing conditions are as follows: the heating rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min for a heat preservation time of 0.5-10 h, such as 0.5 h, 1 h, 3 h, 5 h, 7 h, 9 h or 10 h; the cooling rate is 5-100 °C/min, such as 5 °C/min, 10 °C/min, 20 °C/min, 30 °C/min, 40 °C/min, 50 °C/min, 60 °C/min, 70 °C/min, 80 °C/min, 90 °C/min or 100 °C/min, with the temperature cooled to 200-300°C, such as 200°C, 230°C, 250°C, 270°C or 300°C, followed by furnace cooling to room temperature. Therefore, the content of the quasicrystalline in the coating and the bottom layer can be improved to the greatest extent, and other performances such as the non-stick property of the coating can be improved to the greatest extent. In addition, if the heating rate or the cooling rate is too low, the process time can be prolonged; if the heating rate or the cooling rate is too fast, the quality of the coating can be affected, such as cracking of the coating and the like; if the heat preservation time is too short, the amorphous phase cannot be fully converted into quasicrystalline or the seed crystal cannot be completely grown into crystal grains; the quasicrystalline content of the coating subjected to the annealing is improved compared with that of the bottom layer and the coating which are not subjected to the annealing; and if the heat preservation time is too long, the coating may be cracked.

According to an embodiment of the present disclosure, the method may further include after the step (3):
(5) polishing the quasicrystalline coating formed in the step (3). According to an embodiment of the present disclosure, the coating may be manually or mechanically polished to a finish degree of Ra = 0.08-1.25 µm, thereby further improving the appearance of the coating.

According to an embodiment of the present disclosure, the specific material of the substrate is not limited as long as it has sufficient strength so that the quasicrystalline powder is sprayed on the surface thereof. In some embodiments of the present disclosure, the substrate is a metallic substrate such as (low) carbon steel, aluminum alloy, stainless steel or iron. Thus, the substrate has sufficient strength to withstand the pressure at the time of spraying.

According to the preferred embodiment of the present disclosure, the substrate is the inner surface of the pot body. Thus, the coating is arranged on the inner surface of the pot body to be directly contacted with food, and the non-stick property of the pot body is improved.

According to an embodiment of the present disclosure, the method for forming the quasicrystalline coating can further include:
(6) pre-treating a pot body, wherein the pre-treatment includes stamping, sanding, drying and desanding. Specifically, the pot body can be pre-treated by conventional processes stamping, sanding, drying and desanding to the pot body. Among other things, care needs to be taken to avoid grit residues during the sanding. Residual grit can result in partial loss of the quasicrystalline coating on the substrate, seriously affecting the corrosion resistance of the coating.

In yet another aspect of the present disclosure, a cookware is provided. According to the embodiment of the present disclosure, the cookware comprises: a cookware body and a coating layer disposed on at least a portion of an inner surface of the cookware body, wherein the coating is the coating mentioned above, or the coating is prepared by the method or the system mentioned above; alternatively, the cookware is prepared using the method of the above-mentioned embodiments or the system of the above-mentioned embodiments. The pot body of the cookware is the substrate. Thus, the inner surface of the pot body of the cookware has a coating formed by the method of the above-mentioned embodiment or the system of the above-mentioned embodiment. The inventors have found that the inner surface of the cookware has excellent surface properties, and that the cookware has a good non-stick property, a low cost, and is easy to industrialize, with all the features and advantages of the above-mentioned coating, which will not be described in more detail herein.

Alternatively, it can also be as follows.

In yet another aspect of the present disclosure, the present disclosure provides a cookware prepared by the method of the above embodiment or the system of the above embodiment. The pot body of the cookware is the substrate. Thus, the inner surface of the pot body of the cookware has a quasicrystalline coating formed by the method of the above-mentioned embodiment or the system of the above-mentioned embodiment. It should be noted that all of the features and advantages of the previously described method for forming a quasicrystalline coating, the system for forming the quasicrystalline coating, are equally applicable to the cookware and will not be repeated here. In general, the inner surface of the cookware has excellent surface properties.

According to an embodiment of the present disclosure, the inner surface of the pot body of the cookware is pre-treated prior to forming the coating, and the pre-treatment comprises stamping, sanding, drying and desanding. Thus, the quasicrystalline coating is arranged on the inner surface of the pot body and is directly contacted with food, and the non-stick property of the pot body is improved. According to an embodiment of the present disclosure, the pot body can be pre-treated by conventional processes stamping, sanding, drying and desanding to the pot body. Among other things, care needs to be taken to avoid grit residues during the sanding. Residual grit can result in partial loss of the quasicrystalline coating on the substrate, seriously affecting the corrosion resistance of the coating.

In yet another aspect of the present disclosure, cooking equipment is provided. According to an embodiment of the present disclosure, the cooking equipment comprises the above-mentioned cookware, and the cooking equipment is at least one selected from the group consisting of a wok, a frying pan, a stewing pan, a milk pan, an electric rice cooker and a pressure cooker. The inventors have found that the cooking equipment has all the features and advantages of the above-mentioned cookware and will not be described in more detail here.

According to an embodiment of the present disclosure, it will, of course, be understood by those skilled in the art that the cooking equipment includes, in addition to the coatings and pans described above, the structure or components necessary for conventional cooking equipment. For example, a frying pan includes, in addition to the coating and pot body described above, a handle, which will not be described in more detail herein.

Embodiments of the present disclosure are described in detail below.

### Embodiment 1

The coating includes a first sub-coating layer and a second sub-coating layer stacked from a lower position to an upper position, the particle size of the quasicrystalline material forming the first sub-coating layer is 150-300 microns, and the particle size of the quasicrystalline material forming the second sub-coating layer is 20-150 microns.

The coating preparation method includes the steps of:
1. Melting an alloy raw material into an alloy ingot according to the ratio of atomic quantity of A1 : Cu : Fe : Cr = (60-70) : (15-25) : (5-15) : (5-15).
2. Powder atomization: preparing quasicrystalline powder by a pulverizing apparatus under the vacuum or protective atmosphere environment.
3. Spheroidizing: performing spheroidization and mesh sieving on the powder to obtain the powder having a particle size of 20-150 microns and 150-300 microns respectively.
4. Surface cleaning of base material: cleaning the material surface by means of alcohol, trichloroethylene or pure water plus ultrasonic waves and the like, and drying the same, with a requirement of rust and the like not generated on the surface of the base material before the plasma spraying; and then roughening the substrate surface by sanding.
5. Plasma spraying: spraying 5 layers of a quasicrystalline material with the size of 150-300 microns on a surface of a substrate by the plasma spraying to form a first sub-coating layer, then spraying 5 layers of the quasi crystalline material with the size of 20-150 microns to form a second sub-coating layer, wherein the power is 30-50 KW, the main gas flow is 50-60 L/min, the auxiliary gas flow is 20-30 L/min, and the powder feeding amount is 15-20 g/min.
6. Annealing: annealing the first coating in an argon protective atmosphere, wherein the annealing temperature is 700°C, the heating rate is 20-30 °C/min, the heat preservation time is 1-3 hours, the cooling rate is 10-20 °C/min, with the temperature cooled to 300°C and then to room temperature by furnace cooling.
7. Polishing: polishing the coating to a surface roughness of less than 2 microns.

### Comparative Example 1

The coating-forming quasicrystalline material has a particle size of 20-150 microns.

The coating preparation method includes the steps of:
1. Melting an alloy raw material into an alloy ingot according to the ratio of atomic quantity of A1 : Cu : Fe : Cr = (60-70) : (15-25) : (5-15) : (5-15).
2. Powder atomization: preparing quasicrystalline powder by a pulverizing apparatus under the vacuum or protective atmosphere environment.
3. Spheroidizing: performing spheroidization and mesh sieving on the powder to obtain the powder having a particle size of 20-150 microns.
4. Surface cleaning of base material: cleaning the material surface by means of alcohol, trichloroethylene or pure water plus ultrasonic waves and the like, and drying the same, with a requirement of rust and the like not generated on the surface of the base material before the plasma spraying; and then roughening the substrate surface by sanding.
5. Plasma spraying: spraying 10 layers of a quasicrystalline material with the size of 20-150 microns on a surface of a substrate by the plasma spraying, wherein the power is 30-50 KW, the main air flow is 50-60 L/min, the auxiliary air flow is 20-30 L/min, and the powder feeding amount is 15-20 g/min.
6. Annealing: annealing the first coating in an argon protective atmosphere, wherein the annealing temperature is 700°C, the heating rate is 20-30 °C/min, the heat preservation time is 1-3 hours, the cooling rate is 10-20 °C/min, with the temperature cooled to 300°C and then to room temperature by furnace cooling.
7. Polishing: polishing the coating to a surface roughness of less than 2 microns.

### Comparative Example 2

The coating-forming quasicrystalline material has a particle size of 150-300 microns.

The coating preparation method includes the steps of:
1. Melting an alloy raw material into an alloy ingot according to the ratio of atomic quantity of A1 : Cu : Fe : Cr = (60-70) : (15-25) : (5-15) : (5-15).
2. Powder atomization: preparing quasicrystalline powder by a pulverizing apparatus under the vacuum or protective atmosphere environment.
3. Spheroidizing: performing spheroidization and mesh sieving on the powder to obtain the powder having a particle size of 150-300 microns.
4. Surface cleaning of base material: cleaning the material surface by means of alcohol, trichloroethylene or pure water plus ultrasonic waves and the like, and drying the same, with a requirement of rust and the like not generated on the surface of the base material before the plasma spraying; and then roughening the substrate surface by sanding.
5. Plasma spraying: spraying 10 layers of a quasicrystalline material with the size of 150-300 microns on a surface of a substrate by the plasma spraying, wherein the power is 30-50 KW, the main air flow is 50-60 L/min, the auxiliary air flow is 20-30 L/min, and the powder feeding amount is 15-20 g/min.
6. Annealing: annealing the first coating in an argon protective atmosphere, wherein the annealing temperature is 700°C, the heating rate is 20-30 °C/min, the heat preservation time is 1-3 hours, the cooling rate is 10-20 °C/min, with the temperature cooled to 300°C and then to room temperature by furnace cooling.
7. Polishing: polishing the coating to a surface roughness of less than 2 microns.

The substrates in both Embodiment 1 and Comparative Examples 1-2 are mild steel with a size of 25.4 mm in diameter and 4 mm in thickness; the contact angle is measured by a contact angle tester, and the results are referred to in Table 1, wherein the larger the hydrophobic angle, the better the non-stick property is; and the non-stick property is tested by a method of egg-fried non-stick property, and the test method and standard thereof are performed according to the standard in the national standard GB/T 32095. The test data are shown in Table 1.

**Table 1 Test results of contact angle and egg-fried non-stick property, and production cost of the coating obtained in Embodiment 1 and Comparative Examples 1-2**

| | Contact angle | Egg-fried non-stick property | Production cost |
|---|---|---|---|
| Embodiment 1 | 105° | I | Low |
| Comparative Example 1 | 107° | I | High |
| Comparative Example 2 | 90° | II | Low |

### Embodiment 2

The coating is formed by the steps of:
(1) Selecting pure aluminum, pure copper, pure iron and pure chromium as raw materials, and performing a dosing at an atomic ratio of aluminum: 60-70%, copper: 15-25%, iron: 5-15%, and chromium: 5-15, respectively.
(2) putting the weighed raw materials into a medium-frequency induction furnace for smelting, wherein iron and chromium are placed at the bottom of the medium-frequency induction furnace; and introducing an inert gas as a protective gas in the whole smelting process, or vacuumizing the furnace, and casting to obtain a quasicrystalline alloy ingot after the alloy is completely melted and deslagged.
(3) Feeding the quasicrystalline alloy ingot into a powder atomization device for powder atomization, wherein inert gas protection is adopted in the whole process or the system is vacuumized to obtain the quasicrystalline alloy powder.
(4) Feeding the quasicrystalline alloy powder into a sieving device, and sieving the same by 700-mesh, 180-mesh and 100-mesh sieves respectively to obtain a first powder with at least 90% of the particles having a particle size of not greater than 80 µm and not less than 20 µm, and a second powder with at least 90% of the particles having a particle size of not greater than 80 µm and not greater than 150 µm, and powder having a particle size of less than 20 µm and a particle size of greater than 150 µm. The powder having a particle size of less than 20 µm and a particle size of greater than 150 µm is returned to the step (2) for preparing the quasicrystalline alloy ingot.
(5) Stamping, sanding, drying and desanding a pot body to be formed with the quasicrystalline coating.
(6) Forming a first sub-primary coating layer on an inner surface of the pot body by using a plasma spraying device based on the second powder, wherein the working conditions of the plasma spraying device include the arc power of 25-50 kW and the arc voltage of 40-50 V. The first sub-primary coating layer has a topography shown in Fig. 17.
(7) Spraying the quasicrystalline coating on the surface, away from the pot body, of the first sub-primary coating layer by using the plasma spraying device based on the first powder, wherein the working conditions of the plasma spraying device include the arc power of 25-50 kW and the arc voltage of 40-50 V.
(8) Annealing the first sub-primary coating layer and the second sub-primary coating layer by using the annealing device in an inert gas atmosphere or a vacuum, wherein the annealing temperature is 600-800°C, including the specific conditions that the heating rate is 5-100 °C/min, the heat preservation time is 0.5-10 h, the cooling rate is 5-100 °C/min, and the temperature is reduced to 200-300°C and cooled to room temperature along with the furnace.
(9) Polishing the coating by using a polishing device.

In describing the present disclosure, it should be understood that the orientations or positional relationships indicated by the terms "center", "longitudinal", "transverse", "length", "width", "thickness", "upper", "lower", "front", "rear", "left", "right", "vertical", "horizontal", "top", "bottom", "within", "outer", "clockwise", "counterclockwise", "axial", "radial", "circumferential", and the like, are based on the orientations or positional relationships shown in the drawings, merely to facilitate describing the present disclosure and to simplify the description, and are not intended to indicate or imply that the referenced device or element must have a particular orientation, be constructed and operated in a particular orientation. It is therefore not to be understood as limiting the present disclosure.

Furthermore, the terms "first" and "second" are used for descriptive purposes only and are not to be construed as indicating or implying relative importance or implicitly indicating the number of technical features indicated. Thus, the features defining "first" and "second" may explicitly or implicitly include one or more such features. In the description of the present disclosure, "a plurality of' means two or more unless specifically defined otherwise.

In the present disclosure, unless expressly stated and defined otherwise, a first feature "on" or "under" a second feature may be that the first and second features are in direct contact, or that the first and second features are in indirect contact via an intermediary. Furthermore, the first feature "above", "over" and "on top of' the second feature may be that the first feature is directly above or obliquely above the second feature, or merely indicates that the level of the first feature is higher than that of the second feature. The first feature "below", "under" and "underneath" the second feature may be that the first feature is directly below or obliquely below the second feature, or simply indicates that the horizontal height of the first feature is less than that of the second feature.

In the description of this specification, reference to the description of the terms "one embodiment", "some embodiments", "examples", "specific examples", or "some examples", etc., means that a particular feature, structure, material, or characteristic described in connection with the embodiment or example is included in at least one embodiment or example of the present disclosure. In the present specification, schematic representations of the above terms are not necessarily directed to the same embodiments or examples. Furthermore, the particular features, structures, materials, or characteristics described may be combined in any one or more embodiments or examples in a suitable manner. Moreover, various embodiments or examples described in this description, as well as features of various embodiments or examples, may be incorporated and combined by those skilled in the art without departing from the scope of the present disclosure.

While embodiments of the present disclosure have been shown and described above, it should be understood that the above-described embodiments are illustrative and not restrictive of the present disclosure, and that changes, modifications, substitutions and alterations will occur to others skilled in the art without departing from the scope of the present disclosure.

## Claims

1. A coating, comprising:
a plurality of quasicrystalline material-containing sub-coating layers stacked from a lower position to an upper position;
wherein a particle size of a quasicrystalline material in at least one sub-coating layer is greater than the particle size of the quasicrystalline material in the at least one sub-coating layer located above it.

2. The coating according to claim 1, wherein the particle size of the quasicrystalline material in an uppermost sub-coating layer is minimum among the plurality of the sub-coating layers.

3. The coating according to claim 1 or 2, wherein the particle size of the quasicrystalline material in a lowermost sub-coating layer is maximum among the plurality of sub-coating layers.

4. The coating according to any one of claims 1-3, wherein the sub-coating layer further comprises a quasicrystalline approximant.

5. The coating according to claim 4, wherein the quasicrystalline approximant is a B₂ phase.

6. The coating according to any one of claims 2-5, wherein at least 90% of the quasicrystalline material in the uppermost sub-coating layer has a particle size of not greater than 150 microns.

7. The coating according to claim 6, wherein at least 90% of the quasicrystalline material in the uppermost sub-coating layer has a particle size of 20-80 microns.

8. The coating according to any one of claims 3-7, wherein at least 90% of the quasicrystalline material in the lowermost sub-coating layer has a particle size of 150-300 microns.

9. The coating according to any one of claims 1-8, wherein each sub-coating layer of the plurality of sub-coating layers idependently comprises a plurality of secondary-coating layers .

10. The coating according to claim 9, wherein each sub-coating layer of the sub-coating layers comprises a number of 5-10 secondary-coating layers.

11. The coating according to any one of claims 1-10, wherein the coating has a thickness of 20-200 microns.

12. The coating according to any one of claims 1-11, comprising a first sub-coating layer and a second sub-coating layer stacked from a lower position to an upper position, wherein at least 90% of the quasicrystalline material in the first sub-coating layer has a particle size of 150-300 microns or 80-150 microns, and at least 90% of the quasicrystalline material in the second sub-coating layer has a particle size of 20-150 microns.

13. The coating according to claim 12, wherein at least 90% of the quasicrystalline material in the second sub-coating layer has a particle size of 20-80 microns.

14. The coating according to any one of claims 1-13, wherein the particle size of the quasicrystalline material in the sub-coating layer decreases gradually in a direction from a lower position to an upper postion.

15. The coating according to any one of claims 1-14, wherein the coating satisfies at least one of the following conditions:
a surface roughness of an upper surface is less than 2 micrometers;
a content of the quasicrystalline material is 20%-90%;
a porosity is 0. 1%-20%;
a thermal conductivity is 0.1-3 W/m·K; and
an oxygen content is not greater than 10 at%.

16. The coating according to claim 15, wherein the oxygen content of the quasicrystalline coating is 4-7 at%.

17. A coating, comprising:
a plurality of quasicrystalline material-containing sub-coating layers stacked from a lower position to an upper postion;
wherein a porosity of a quasicrystalline material in at least one sub-coating layer is greater than the porosity of the quasicrystalline material in the at least one sub-coating layer located above it.

18. The coating according to claim 17, wherein the porosity of the quasicrystalline material in an uppermost sub-coating layer is minimum among the plurality of sub-coating layers.

19. The coating according to claim 17 or 18, wherein the porosity of the quasicrystalline material in a lowermost sub-coating layer is maximum among the plurality of sub-coating layers.

20. The coating according to any one of claims 17-19, wherein the porosity of the quasicrystalline material in the sub-coating layer is reduced in a gradient manner from a lower position to an upper position.

21. A method for forming a coating according to any one of claims 1-16, comprising:
(1) enabling a plurality of groups of quasicrystalline powders with different particle sizes to be stacked from a lower position to an upper positionto form a plurality of quasicrystalline materia-containing sub-primary coating layers on a substrate, in order to obtain a primary coating; and
(2) annealing the primary coating to obtain the coating comprising a plurality of sub-coating layers, wherein a particle size of the quasicrystalline material in at least one sub-coating layer is greater than the particle size of the quasicrystalline material in the at least one sub-coating layer located above it.

22. The method according to claim 21, wherein the quasicrystalline powder is prepared by the following steps:
pulverizing a quasicrystalline alloy ingot by a pluverization step to obtain quasicrystalline alloy powder;
sieving the quasicrystalline alloy powder by a sieving step to obtain the plurality of groups of quasicrystalline powders with different particle sizes.

23. The method according to claim 21 or 22, wherein the plurality of groups of quasicrystalline powders with different particle sizes comprise a first powder and a second powder, a particle size of the first powder particles is less than the particle size of the second powder particles.

24. The method according to claim 22 or 23, wherein the quasicrystalline alloy ingot is formed by smelting a mixture comprising at least one of the materials among: an aluminum material, a copper material, an iron material, and a chromium material.

25. The method according to claim 24, wherein by atomic percentage the mixture comprises 60-70% of aluminum, 10-25% of copper, 5-15% of iron, and 5-15% of chromium.

26. The method according to claim 24, wherein the aluminum material is pure aluminum, the copper material is pure copper, the iron material is pure iron, and the chromium material is pure chromium or a chromium-titanium alloy.

27. The method according to any one of claims 22-26, further comprising preparing the quasicrystalline alloy ingot by using the quasicrystalline powder with a particle size that does not meet coating preparation requirements.

28. The method according to any one of claims 22-27, wherein the pulverization step is performed by an atomization pulverization method.

29. The method according to any one of claims 23-28, further comprising in the step (1):
(1-1) forming a first sub-primary coating layer by the second powder on the substrate ; and
(1-2) forming a second primary sub-coating layer by the first powder on a surface of the first sub-primary coating layer away from the substrate .

30. The method according to any one of claims 21-29, wherein the plurality of quasicrystalline material-containing sub-primary coating layers are formed by a spraying method.

31. The method according to any one of claims 21-30, wherein the plurality of quasicrystalline material-containing sub-primary coating layers are formed by a plasma spraying method.

32. The method according to claim 31, wherein the conditions of the plasma spraying method comprise an arc power of 25-50 kW and an arc voltage of 40-50 V.

33. The method according to any one of claims 21-32, wherein the annealing is performed in an inert gas atmosphere or a vacuum, and an annealing temperature is 600-800°C.

34. The method according to claim 33, wherein the annealing conditions are a heating rate of 5-100 °C/min, a heating preservation time of 0.5-10 h, and a cooling rate of 5-100 °C/min, wherein the temperature is reduced to 200-300°C, and then cooled to room temperature by furnace cooling.

35. The method according to any one of claims 21-34, further comprising polishing the coating by a polishing step after the step (2).

36. A system for performing a method for forming acoating according to any one of claims 21-35, comprising:
a spraying device configured to spray a quasicrystalline powder on a surface of asubstrate so as to obtain a primary coating; and
an annealing device connected to the spraying device and configured to anneal the primary coating so as to obtain the coating.

37. The system according to claim 36, further comprising:
a pulverizing device configured to pulverize the quasicrystalline alloy ingot by a pulverization step, so as to obtain the quasicrystalline alloy powder; and
a sieving device connected with the pulverizing device and the spraying device and the sieving device configured to sieve the quasicrystalline alloy powder so as to obtain the plurality of groups of quasicrystalline powders with different particle sizes.

38. The system according to claim 36 or 37, wherein the spraying device is configured to form the primary coating on the substrate based on the plurality of groups of quasicrystalline powders with different particle sizes.

39. The system according to any one of claims 36-38, further comprising:
a smelting device connected to the pulverizing device and configured to smelt a mixture containing at least one of the materials among: an aluminum material, a copper material, an iron material and a chromium material, so as to obtain the quasicrystalline alloy ingot.

40. The system according to any one of claims 37-39, wherein the sieving device comprises a plurality of sieving units, a sieve is provdided in the plurality of sieving units , the sieve is configured to sieve the quasicrystalline alloy powder to obtain the plurality of groups of quasicrystalline powders with different particle sizes.

41. The system according to any one of claims 36-40, wherein the spraying device comprises a plurality of sub-primary coating layer spraying units the plurality of sub-primary coating layer spraying units are configured to form the plurality of quasicrystalline material-containing sub-primary coating layers on the substrate by using the plurality of groups of quasicrystalline powders with different particle sizes.

42. The system according to any one of claims 39-41, wherein the sieving device is connected to the smelting device and is configured to convey the quasicrystalline powder having a particle size that does not meet coating preparation requirements to the smelting device.

43. The system according to any one of claims 36-42, further comprising:
a polishing device connected to the annealing device and the polishing deviceconfigured to polish the coating.

44. A cookware, comprising: a cookware body and a coating disposed on at least a portion of an inner surface of the cookware body, wherein the coating is a coating according to any one of claims 1-20, or the coating is prepared by a method according to any one of claims 21-35 or the coating is prepared by a system according to any one of claims 36-43.

45. The cookware according to claim 44, wherein the inner surface of the pot body of the cookware is pre-treated prior to forming the coating, and the pre-treatment comprises stamping, sanding, drying and desanding.

46. A cooking equipment, comprising a cookware according to claim 44 or 45, wherein the cooking equipment is at least one of the equipment among: a wok, a frying pan, a stewing pan, a milk pan, an electric rice cooker and a pressure cooker.
